# EUROPEAN PATENT SPECIFICATION

(11) **EP 0 951 683 B1**
(45) Date of publication and mention of the grant of the patent: **28.05.2003**
(21) Application number: 97948503.4
(22) Date of filing: 19.11.1997
(51) Int. Cl.: G06F 15/80

(54) **MULTI-KERNEL NEURAL NETWORK CONCURRENT LEARNING, MONITORING, AND FORECASTING SYSTEM**
MEHRFACHKERN NEURONALES NETZWERK MIT GLEICHZEITIGEM LERN- , UBERWACHUNGS- UND VORHERSAGESYSTEM
SYSTEME D'APPRENTISSAGE, DE CONTROLE ET DE PREVISION CONCURRENTIELS A RESEAU NEURONAL A NOYAUX MULTIPLES

(30) Priority: 20.11.1996 US 31195 P
(43) Date of publication of application: 27.10.1999
(73) Proprietor: Jannarone, Robert J., Atlanta, GA 30341 (US)
(72) Inventor: Jannarone, Robert J., Atlanta, GA 30341 (US)
(74) Representative: Chettle, Adrian John
(86) International application number: US9721522
(87) International publication number: WO98022885

(56) References cited:
- EP-A- 0 557 997
- WO-A-96/14616
- MANNER R ET AL: "MULTIPROCESSOR SIMULATION OF NEURAL NETWORKS WITH NERV" PROCEEDINGS OF THE SUPERCOMPUTING CONFERENCE, RENO, NOV. 13 - 17, 1989, no. CONF. 2, 13 November 1989, INSTITUTE OF ELECTRICAL AND ELECTRONICS ENGINEERS, pages 457-465, XP000090912
- HEEMSKERK J N H ET AL: "THE BSP400: A MODULAR NEUROCOMPUTER" MICROPROCESSORS AND MICROSYSTEMS, vol. 18, no. 2, 1 March 1994, pages 67-78, XP000440125
- TRELEAVEN P ET AL: "VLSI ARCHITECTURES FOR NEURAL NETWORKS" IEEE MICRO, vol. 9, no. 6, 1 December 1989, pages 8-27, XP000086574

## Description

### TECHNICAL FIELD

This invention relates to neural network information processing systems and, more particularly, relates to a multi-kernel neural network computing architecture configured to learn correlations among feature values as the network monitors and imputes measured input values and also predicts future output values.

### BACKGROUND OF THE INVENTION

During the on-going boom in computer technology, much of the attention has focused on sequential information processing systems, such as those found in a wide range of computing systems ranging from hand-held personal computers to large mainframe computers. In general, most "flat file" sequential information processing systems can be very effective at performing tasks for which the inputs, outputs, and operations are known in advance. But they are less well suited to performing adaptive tasks in which the inputs, outputs, and operations change over time in response to changing environmental factors, changing physical characteristics, and so forth. In other words, typical "flat file" sequential information processing systems are not well suited to performing tasks that involve learning.

Neural networks are a category of computer techniques that may be used to implement learning systems. In particular, neural network computer architectures have been developed to simulate the information processes that occur in thinking organisms. Neural network techniques are often implemented using dedicated hardware processors, such as parallel-processing logic arrays. Generally described, a neural network is a system of interconnected nodes having inputs and outputs in which an output of a given node is driven by a weighted sum of the node's inputs. A neural network is well suited to monitoring, forecasting, and control applications in which the input and output values correspond to physical parameters that can be measured during a series of time trials. Monitoring and forecasting the same values allows the relationships among the input and output values to be learned through empirical analysis applied to measured input and output values. The learned relationships may then be applied to predicted output values from measured input values.

To apply a typical neural network system to a physical application, the neural network is configured with appropriate inputs and outputs for the given application. Once constructed, the network is exposed during a training phase to a series of time trials including measured values for both the inputs and the outputs. Through empirical analysis during the training phase, the network learns the relationships among the measured inputs and outputs. After the network has been trained, it may be used during subsequent time trials in a predicting phase to compute predicted outputs from measured inputs. That is, during the predicting phase the network uses the measured inputs to compute predicted outputs based on the relationships learned during the training phase. In a forecasting application, the network typically receives measurements corresponding to the output values during future time trials. These measured output values are then compared to the predicted output values to measure the performance, or predicting accuracy, of the network.

The neural network may also be retrained from time to time, resulting in a training-predicting operating cycle. Although this type of conventional neural network can effectively apply learned input-output relationships to perform a predictive analysis, the network requires a distinct training phase before a predictive analysis can be performed. The network is not, in other words, capable of learning relationships during the predicting phase. By the same token, the network is not capable of conducting a predicting analysis during the training phase. This drawback limits the usefulness of conventional neural networks in certain situations.

In particular, the inability of conventional neural networks to learn and predict simultaneously limits the effectiveness of these networks in applications in which the relationships between inputs and outputs should be ascertained as quickly as possible, but it is not known how many time trials will be required to learn the relationships. In this situation, it is difficult to determine how many time trials will be adequate to train the network. Similarly, conventional neural networks are not well adapted to applications in which the relationships between inputs and outputs can change in an unknown or unpredictable way. In this situation, it is difficult to determine when to retrain the neural network.

As a result, conventional neural networks experience important limitations when applied to monitoring, forecasting, and control tasks in which the relationships between the inputs and outputs must be ascertained very quickly and in which the relationships between the inputs and outputs change in an unknown or unpredictable manner. Of course, many monitoring, forecasting, and control tasks fall into these categories. For example, machines such as missile controllers and information packet routers experience rapid changes in the input-output relationships that should be ascertained very quickly. Other monitoring and control operations involving machines that may experience fundamental failures, such as a structural member collapsing or a missile veering out of control, often exhibit input-output relationships that change in an unknown or unpredictable manner.

Conventional neural networks also experience limited effectiveness in applications in which input-output relationships change over time in response to changing factors that are unmeasured and, in many cases, unmeasurable. For example, a commodity price index can be expected to change over time in an unpredictable manner in response to changing factors such as inventory levels, demand for the commodity, the liquidity of the money supply, the psychology of traders, and so forth. Similarly, the relationships between electricity demand and the weather can be expected to change over time in an unpredictable manner in response to changing factors such as demographics, the technology of heating and cooling equipment, economic conditions, and the like.

Another limitation encountered with conventional neural networks stems from the fact that the physical configuration of the network is typically tailored for a particular set of inputs and outputs. Although the network readily learns the relationships among these inputs and outputs, the network is not configured to redefining its inputs and outputs in response to measured performance. This is because the input-output connection weights applied by the network may change when the network is retrained, but the inputs and outputs remain the same. Without an effective input-output refinement process, the network cannot identify and eliminate ineffective or redundant inputs and outputs. As a result, the network cannot adapt to changing conditions or continually improve prediction for a particular application.

Interestingly, the two shortcomings associated with conventional neural networks described above -- the inability to learn and predict simultaneously and the lack of an effective input-output refinement process -- are shortcomings that have apparently been overcome in even the most rudimentary thinking organisms. In fact, the ability to predict and learn simultaneously is an important aspect of an awake or cognitive state in a thinking organism. And the ability to allocate increasing amounts of input-output processing capacity in response to repetition of a task is an important aspect of learning in a thinking organism. Practice makes perfect, so to speak. As a result, conventional neural networks that lack these attributes experience important limitations in simulating the intelligent behavior of thinking organisms.

Accordingly, there is a general need in the art for monitoring, forecasting, and control systems that simultaneously learn and predict. There is a further need in the art for monitoring, forecasting, and control techniques that include effective input-output refinement processes.

### SUMMARY OF THE INVENTION

The present invention meets the needs described above in a multi-kernel neural network computing architecture configured to learn correlations among feature values as the network monitors and imputes measured input values and also forecasts future output values. This computing architecture, referred to as a concurrent-learning information processor (CIP), includes a multi-kernel neural network array with the capability to learn and predict simultaneously. The CIP also includes a manager and an input-output transducer that may be used for input-output refinement. These components allow the computing capacity of the multi-kernel array to be reassigned in response to measured performance or other factors. The output feature values computed by the multi-kernel array and processed by an output processor of the transducer are supplied to a response unit that may be configured to perform a variety of monitoring, forecasting, and control operations in response to the computed output values. Important characteristics of the CIP, such as feature function specifications, connection specifications, learning weight schedules, and the like may be set by a technician through a graphical user interface.

The multi-kernel array learns and predicts simultaneously in "real time" in that each kernel of the array performs a predicting-learning cycle for each time trial. The ability of the CIP to learn and predict simultaneously in real time represents a significant advancement in neural network techniques. The ability of the manager, along with the input-output transducer, to redefine the input-output relationships of the multi-kernel array from time to time represents another significant advancement. The multi-kernel array may be organized into various types of sub-arrays to tailor the CIP to various types of physical applications. The multi-kernel array typically includes at least one monitoring sub-array and at least one forecasting sub-array. The monitoring sub-array imputes input and output feature values for the current time trial. These imputed feature values are used to compute deviance values for the current time trial and to supply imputed feature values for missing or out-of-tolerance measured input values, if necessary. The forecasting sub-array predicts output feature values for future time trials.

The operating cycle for each time trial in a multi-kernel array including a monitoring sub-array and a forecasting sub-array is imputation prediction (predicting in the monitoring sub-array), forecasting learning (learning in the forecasting sub-array), forecasting prediction (predicting in the forecasting sub-array), and imputation learning (learning in the monitoring sub-array). This sequence allows the monitoring sub-array to perform its imputing function for the current time trial before learning, and then allows the forecasting sub-array to learn from the current time trial before predicting. Learning in the monitoring sub-array is delayed until after the forecasting sub-array has completed its cycle to speed the availability of the predicted output values.

Monitoring and forecasting kernels may be grouped into sub-arrays to tailor the CIP to various physical applications. For example, the organization of the multi-kernel array may correspond to a spatial configuration of inputs and outputs, a temporal configuration of inputs and outputs, or a combined spatial and temporal configuration of inputs and outputs. As specific examples, a spatial configuration may be tailored to an image processing application, a temporal configuration may be tailored to a commodity price forecasting application, or a combined spatial and temporal configuration may be tailored to an energy demand forecasting application.

Generally described, the invention is a method for responding to computed output values that are based on measured input values received during a current time trial and during one or more historical time trials. The measured input values are received for the current time trial, and a vector of input feature values is assembled based on the measured input values. The input feature values are provided to a multi-kernel processor. Each kernel of the processor is operative for receiving one or more of the input feature values and performing a number of operations using the input feature values.

In particular, each kernel retrieves connection specifications defining mathematical relationships for computing one or more output feature values based on the received input feature values. The kernel also retrieves a set of connection weights representing regression coefficients among the received input feature values and the computed output feature values. The kernel also retrieves a set of learning weights defining mathematical relationships for updating the connection weights based on the received input feature values. The kernel then computes the output feature values based on the received input feature values, the connection weights, and the connection specifications.

The kernel also computes updated connection weights based on the received input feature values, the connection weights, the connection specifications, and the learning weights. The connection weights may define the elements of an inverse covariance matrix, and the step of computing the updated connection weights may include updating the inverse covariance matrix. Alternatively, the step of computing the updated connection weights may include updating a covariance matrix corresponding to the inverse covariance matrix and then inverting the updated covariance matrix.

The output feature values typically include imputed output feature values for the current time trial and predicted output feature values for future time trials. Each kernel provides access to its output feature values. This allows a vector of computed output values to be assembled based on the output feature values computed by each kernel. An operation, such as a deviance operation or a control operation, is then performed in response to the vector of computed output values.

According to an aspect of the invention, the vector of input feature values may be computed based on the measured input values and input feature specifications. For example, the input feature values may be based on algebraic combinations of measured input values, coefficients corresponding to a polynomial approximating a function defined by measured input values, coefficients corresponding to a differential equation corresponding to a function defined by measured input values, or coefficients corresponding to a frequency-domain function corresponding to a function defined-by-measured input values. Similarly, the output values may be computed based on the output feature values and output feature specifications. In particular, an output value may be computed by performing the mathematical inverse of a mathematical operation performed on a corresponding measured input value.

According to another aspect of the invention, the output feature values may include imputed output feature values based on the input feature values for one or more historical time trials. The output feature values may also include monitored output feature values based on the input feature values for the current time trial. Deviance values may be calculated by subtracting the imputed output feature values from the monitored output feature values. The deviance values may then be compared to threshold values to determine alarm conditions or the need to perform control operations. The output values are typically based on the monitored output feature values.

If one of the deviance values exceeds its associated threshold value, a deviance operation may be performed, such as indicating an alarm condition or basing the computed output values on the imputed output feature value rather than the monitored output feature value for the output feature value associated with the deviance value that exceeds its associated threshold value. Control operations, such as displaying a representation of the computed output values on a display device or actuating a controlled parameter to compensate for a condition indicated by the computed output values, may also be performed in response to the computed output values.

According to yet another aspect of the invention, refinement operations may be conducted. These refinement operations may include deleting ineffective input or output feature values, combining redundant input or output feature values, specifying new input or output feature values, recomputing the feature value specifications based on the measured input values and the computed output values for a plurality of time trials, recomputing the learning weights based on the measured input values and the computed output values for a plurality of time trials, recomputing the connection specifications based on the measured input values and the computed output values for a plurality of time trials, recomputing the output feature specifications based on the measured input values and the computed output values for a plurality of time trials, and reassigning functionality among the kernels.

The multi-kernel processor may include one or more monitoring sub-arrays and one or more forecasting sub-arrays. For a configuration that includes both monitoring and forecasting kernels, imputed output feature values for the monitoring sub-array are first computed based on the input feature values for one or more historical time trials, the connection weights, and the connection specifications. The updated connection weights for the forecasting sub-array are then computed based on the received input feature values for the current time trial, the connection weights, the connection specifications, the learning weights, and the imputed output feature values. Next, the output feature values for the forecasting sub-array are computed based on the input feature values for one or more historical time trials, the updated connection weights, and the connection specifications. The updated connection weights for the forecasting sub-array are then computed based on the received input feature values, the connection weights, the connection specifications, and the learning weights.

The configuration of the multi-kernel processor may be tailored to a particular physical application. For example, the multi-kernel processor may include several sub-arrays that each include one monitoring kernel and several forecasting kernels. In a first configuration, the multi-kernel processor includes an array of spatially-dedicated kernels corresponding to a spatially-contiguous field from which input values are measured and for which output valued are predicted. In this configuration, each kernel is configured to compute one of the output values based on a set of adjacent measured input values. Specifically, each kernel of the multi-kernel processor may correspond to a pixel in a visual image, each measured input value may correspond to a measured intensity of one of the pixels of the visual image, and each computed output value may correspond to a computed intensity of one of the pixels of the visual image.

In a second configuration, the multi-kernel processor includes an array of temporally-dedicated kernels corresponding to a time-based index from which input values are measured and for which output valued are predicted. In this configuration, each kernel is configured to predict a mutually-exclusive one of the time-based index values based on the measured input values. For example, each kernel of the multi-kernel processor may correspond to a mutually-exclusive time-specific forecast for a commodity price index, and each kernel may be configured to predict its corresponding mutually-exclusive time-specific price forecast based on the measured input values. In this case, the measured input values typically include the commodity price index along with price indices for currencies and other commodities.

In a third configuration, the multi-kernel processor includes several kernel groups that each include a number of temporally-dedicated kernels corresponding to a time-based index from which input values are measured and for which output valued are predicted. Each kernel group includes several individual kernels that are each configured to predict a component of a mutually-exclusive time-based index value based on the measured input values. The groups of temporarily-dedicated kernels define an array of spatially-dedicated kernel groups in which each kernel group is configured to compute a component of the time-based index. For example, the time-based index may include an electricity demand index, each kernel group may correspond to several electricity delivery points, and the measured input values may include electricity demand and a short-term weather forecast.

The invention also provides a computer system including an input processor configured to receive an iteration of the measured input values for the current time trial and to assemble a vector of input feature values based on the measured input values. The computer system also includes a multi-kernel processor coupled to the input processor and configured for receiving the vector of input feature values. Each kernel of the processor is operative for receiving one or more of the input feature values.

The kernels are also operative for retrieving connection specifications defining mathematical relationships for computing one or more output feature values based on the received input feature values. The kernels are also operative for retrieving a set of connection weights representing regression coefficients among the received input feature values and the computed output feature values. The kernels are also operative for retrieving a set of learning weights defining mathematical relationships for updating the connection weights based on the received input feature values. The kernels are also operative for computing the output feature values based on the received input feature values, the connection weights, and the connection specifications.

The kernels are also operative for computing updated connection weights based on the received input feature values, the connection weights, the connection specifications, and the learning weights. To update the connection weights, each kernel may update an inverse covariance matrix. Alternatively, each kernel may update a covariance matrix and then invert the updated covariance matrix. The kernels are also operative for storing the updated connection weights. Each kernel is also operative for providing access to the computed output feature values.

The computer system also includes an output processor coupled to the multi-kernel array and configured for assembling a vector of computed output values based on the output feature values computed by each kernel. The computer system also includes a response unit coupled to the output processor and configured for responding to the vector of computed output values.

The computer system may also include a manager configured for recomputing the learning weights based on the measured input values and the computed output values for a plurality of time trials. The manager may also be configured to recompute the connection specifications based on the measured input values and the computed output values for a series of time trials. The manager may also be configured to delete ineffective input or output feature values, combine redundant input or output feature values, specify new input or output feature values, recompute input or output feature specifications based on the measured input values and the computed output values for a plurality of time trials, and reassign functionality among the kernels.

The computer system may also include a learned parameter memory coupled to the multi-kernel array and operative for receiving the connection weights from the multi-kernel array, storing the connection weights, and providing the connection weights to the multi-kernel array. The response unit of the computer system may be operative for displaying a representation of the computed output values on a display device, indicating an alarm condition, and actuating a controlled parameter to compensate for a condition indicated by the computed output values.

That the invention improves over the drawbacks of conventional neural network systems and accomplishes the advantages described above will become apparent from the following detailed description of exemplary embodiments of the invention and the appended drawings and claims.

### BRIEF DESCRIPTION OF DRAWINGS

FIG. 1 is a functional block diagram of a concurrent-learning information processor in accordance with an embodiment of the invention.
FIG. 2 illustrates a sub-array structure for a concurrent-learning information processor.
FIG. 3 illustrates an analogy between a concurrent-learning information processor and the information processes of a thinking organism.
FIG. 4A illustrates a kernel of a multi-kernel array for a concurrent-learning information processor in which the kernels are organized to correspond to a spatial configuration of inputs and outputs.
FIG. 4B illustrates a multi-kernel array for a concurrent-learning information processor in which the kernels are organized to correspond to a spatial configuration of inputs and outputs.
FIG. 5 illustrates a multi-kernel array for a concurrent-learning information processor in which the kernels are organized to correspond to a temporal configuration of inputs and outputs.
FIG. 6 illustrates a multi-kernel array for a concurrent-learning information processor in which the kernels are organized to correspond to a combined spatial and temporal configuration of inputs and outputs.
FIG. 7A illustrates a typical learning weight schedule for a concurrent-learning information processor.
FIG. 7B illustrates a learning weight schedule for a concurrent-learning information processor in which more recent time trials are weighted more aggressively than the in the learning weight schedule of FIG. 7A.
FIG. 7C illustrates a learning weight schedule for a concurrent-learning information processor in which learning is based only on certain time trials that occur on a cyclic basis.
FIG. 7D illustrates the learning weight schedule of FIG. 7C modified so that more recent time trials are weighted more aggressively.
FIG. 8A illustrates a typical input feature function applied in a transducer of a concurrent-learning information processor.
FIG. 8B illustrates a concurrent-learning information processor configured to compute electricity demand forecasts from electricity demand measurements and weather forecast data.
FIG. 9 is a logic flow diagram illustrating the operation of a concurrent-learning information processor.
FIG. 10 is a logic flow diagram illustrating a monitoring, forecasting, and learning routine for a concurrent-learning information processor.
FIG. 11 is a logic flow diagram illustrating an input-output refinement routine for a concurrent-learning information processor.

### DETAILED DESCRIPTION OF THE PREFERRED EMBODIMENTS

The invention is a concurrent-learning information processor (CIP) that may be embodied in dedicated-hardware computing equipment or in software that runs on conventional sequential processing computing equipment. The dedicated hardware embodiments are best suited to applications that require very fast processing, whereas the software embodiments are best suited to applications that will tolerate significantly lower processing rates. In general, the software embodiments may be significantly less expensive to implement because they will run on off-the-shelf computer equipment. The hardware embodiments, on the other hand, require specially-made dedicated-hardware computing equipment. Because the CIP structure includes a manager and transducer that permit reconfiguration of input-output relationships, however, a single hardware embodiment may be configured to perform a wide range of different tasks. For this reason, both the software and the hardware embodiments may be used as multi-purpose, and in many respects general-purpose, processors.

The software embodiments are preferably configured in an object-oriented architecture in which the discrete components of the CIP are programmed in discrete objects. Each object includes a predefined interface that defines a protocol for communicating and exchanging data with the object. By configuring the software embodiment in discrete objects, each object may have a corresponding discrete physical element or group of elements in a hardware analog. This relationship between the software and hardware embodiments facilitates developing and testing models in software and, once perfected, mass producing hardware embodiments. Nevertheless, it should be understood that the invention could be embodied in other types of object-oriented architectures and could use software techniques other than object-oriented programming.

The major components of the CIP are an input-output transducer, a multi-kernel neural network array, a manager, a response unit, and a user interface. The processing sequence for a particular time trial begins when the transducer receives measured input values. The transducer includes an input processor that transforms the measured input values into input feature values in accordance with input feature specifications supplied by the manager. The multi-kernel array computes output feature values based on the input feature values, connection specifications supplied by the manager, and regression coefficients that are stored in a learned parameter memory. The output feature values are returned to the transducer, which includes an output processor that transforms the output feature values into computed output values in accordance with output feature specifications supplied by the manager. The computed output values are then transmitted to a response unit that may perform a variety of monitoring, forecasting, and control operations in response to the output values.

Each kernel of the multi-kernel array performs predicting operations and learning operations for each time trial. The array typically includes one or more monitoring kernels, referred to as a monitoring sub-array, and one or more forecasting kernels, referred to as a forecasting sub-array. The monitoring sub-array imputes input feature values and computes deviance values based on the imputed input feature values. Imputation, in this sense, means predicting the input feature values based on historical data stored in a recent feature memory. The deviance values are then computed as the difference between the imputed input feature values and the input feature values based on the measured input values for the current time trial. The deviance values are compared to tolerance values to trigger deviance operations, such as indicating an alarm condition or using an imputed feature value rather than a measured feature value in subsequent computations. Using imputed feature values in subsequent computations is particularly useful when measured input values are missing or corrupted.

The forecasting sub-array predicts output feature values for future time trials. Because the forecasting sub-array is concerned only with future time trials, it may be configured to learn from the input data for the current time trial before predicting output data for future time trials. The monitoring sub-array, on the other hand, first predicts by imputing values for the current time trial and then learns from the input data for the current time trial. Therefore, the operating cycle for each time trial processes is imputation prediction (predicting in the monitoring sub-array), forecasting learning (learning in the forecasting sub-array), forecasting prediction (predicting in the forecasting sub-array), and imputation learning (learning in the monitoring sub-array). This sequence allows the monitoring sub-array to perform its imputing function for the current time trial before learning, and then allows the forecasting sub-array to learn from the current time trial before performing its predicting function. Learning for the monitoring sub-array is delayed until after the forecasting sub-array has completed its cycle to speed the availability of the output values.

The CIP repeats the preceding operating cycle in a steady-state mode for multiple time trials until refinement operations are indicated. Many thousand operating cycle are typically repeated between refinement operations. During refinement operations, the manager may reconfigure the CIP in many ways, often in response to parameters and other instruction received through the user interface. Specifically, the manager may output descriptive statistics, delete ineffective feature values, combine redundant feature values, specify new feature values, redefine connection specifications for the multi-kernel array, redefine input feature specifications for the transducer input processor, redefine output feature specifications for the transducer output processor, redefine learning weight specifications for updating the connection weights, reconfigure the transducer functionality, and reassign the computing capacity of the multi-kernel array. The refinement operations give the CIP the ability to reconfigure itself in response to measured performance, user instructions, and other factors.

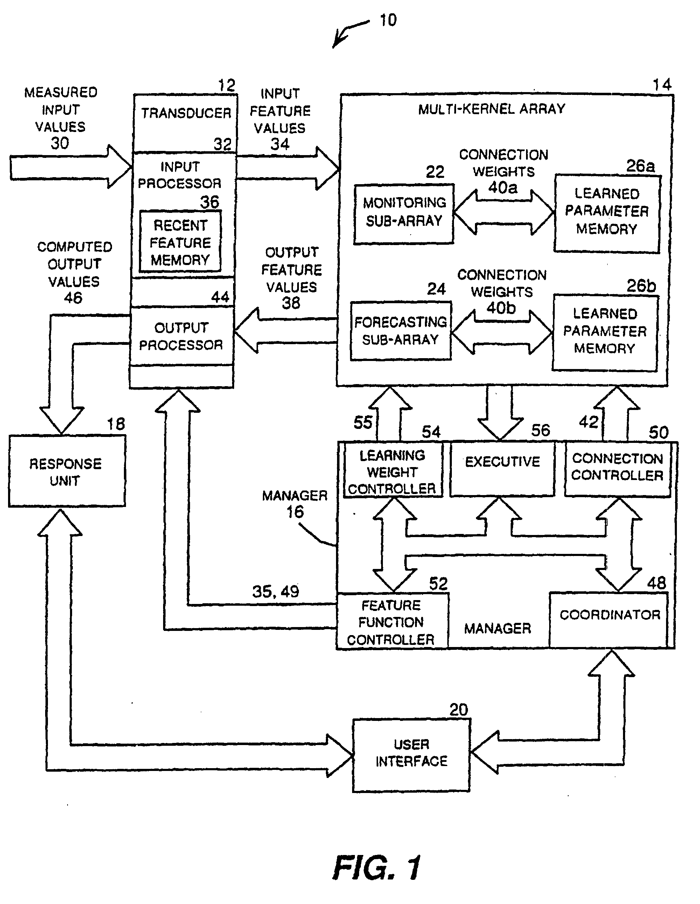

FIG. 1 and the following discussion are intended to provide a general description of a suitable computing architecture in which the invention may be implemented. The invention will be described in the context of a dedicated-hardware neural network computer or an analogous object-oriented software program that runs on an sequential processing computer. That is, the following description applies to both a dedicated-hardware neural network and to an analogous object-oriented software program. Those skilled in the art will recognize, however, that the invention also may be implemented in other types of computing systems and software architectures. Moreover, the invention may also be practiced in distributed computing environments in which tasks are performed by remote processing devices that are linked through a communications network. In a distributed computing environment such as the Internet, program modules may be located in both local and remote memory storage devices.

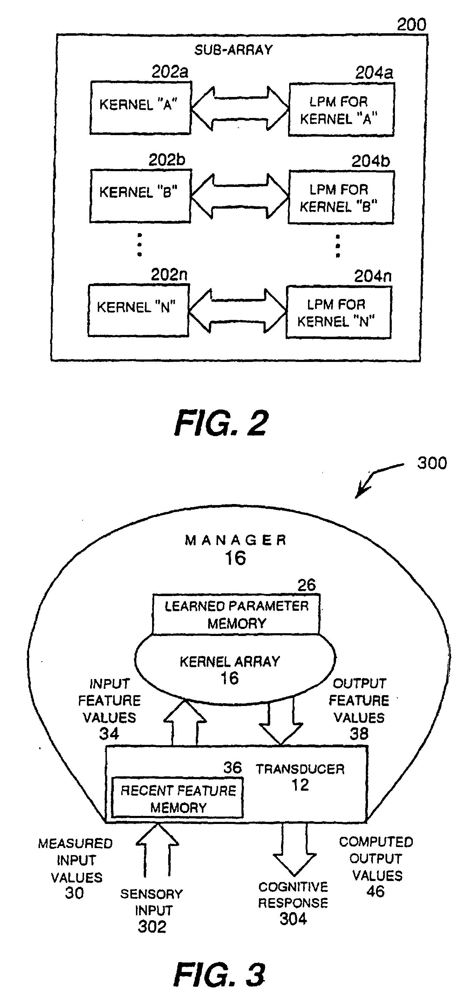

Exemplary embodiments of the invention are described below with reference to the appended figures. In this description, like elements are indicated by like element numbers throughout the several figures. FIG. 1 is a functional block diagram of a CIP **10.** The major components of the CIP **10** are an input-output transducer **12,** a multi-kernel neural network array **14,** a manager **16,** a response unit **18,** and a user interface **20.** The multi-kernel array **14** includes one or more monitoring kernels, referred to as a monitoring sub-array **22,** and one or more forecasting kernels, referred to as a forecasting sub-array **24.** The monitoring sub-array **22** and the forecasting sub-array **24** each have an associated learned parameter memory **26a** and **26b,** respectively. In fact, as shown best on FIG. 3, each kernel of each sub-array preferably has an associated learned parameter memory.

The CIP **10** receives an iteration of measured input values **30** during each of a series of time trials. The processing sequence for a particular time trial begins when the transducer **12** receives an iteration of measured input values **30.** The measured input values received during each time trial can be thought of as a one-dimensional vector that forms a two-dimensional array for multiple time trials. The measured input values **30** may represent values from any of a variety of physical applications for which that the CIP **10** is configured. For example, the measured input values **30** may represent the intensity of pixels in a video image, the readings of strain gauges or tank levels, data packet routing information, commodity price and other economic indices, electricity demand and weather forecast data, and so forth.

The transducer **12** includes an input processor **32** that transforms the measured input values into input feature values **34** in accordance-with input feature specifications **35** supplied by the manager **16.** The input feature values **34,** which represent the measured input values in subsequent processing, are used as independent variables in the multi-kernel array **14.** In the simplest case, the input processor **32** may simply assemble the measured input values **30** into a vector and pass the assembled vector to the multi-kernel array **14.**

In more complex cases, the input processor **32** mathematically manipulates the measured input values **30** to compute the input feature values **34.** These computations are performed in accordance with input feature specifications **35** supplied by the manager **16.** For example, the input feature values **34** may be based on algebraic combinations of measured input values **30,** coefficients corresponding to a polynomial approximating a function defined by measured input values, coefficients corresponding to a differential equation corresponding to a function defined by measured input values, coefficients corresponding to a frequency-domain function corresponding to a function defined by measured input values, and so forth. Other types of input feature specifications may become evident to those skilled in the art as CIPs are configured for different types of specific physical applications.

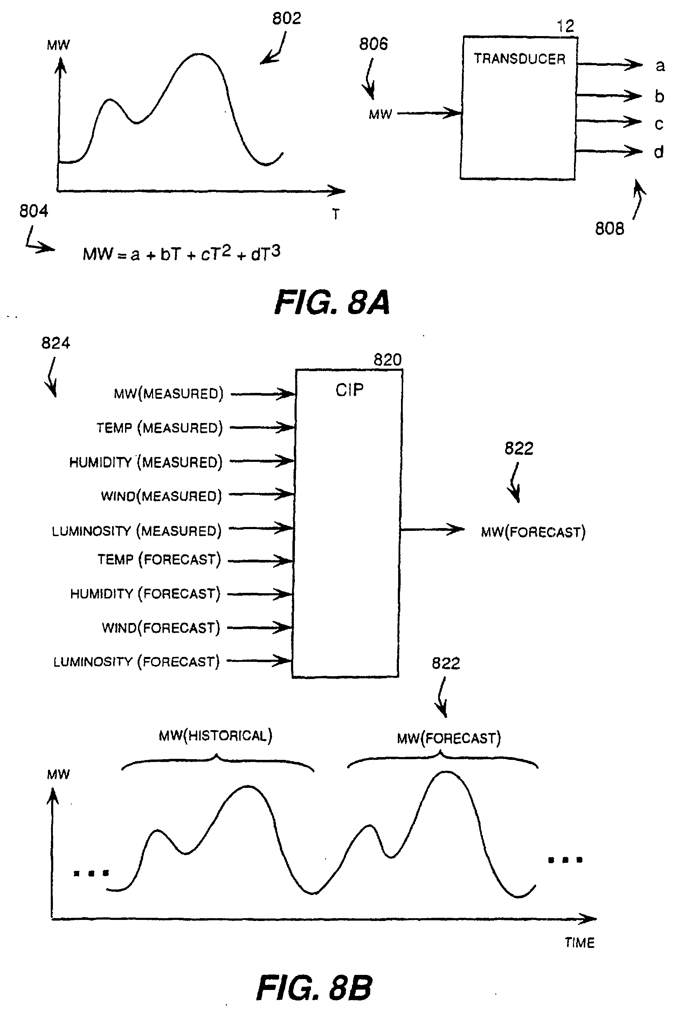

Like the measured input values **30,** the input feature values **34** for a particular time trial may be thought of as a one-dimensional vector. The input processor **12** stores a two-dimensional array of input feature values **34** for a series of historical time trials in a recent feature memory **36.** Alternatively, the recent feature memory **36** may store a two-dimensional array of measured input values **30** for a series of historical time trials. The input processor **12** may use the historical data in the recent feature memory **36** to apply the input feature specifications **35** when computing the input feature values **34.** An example of this type of input feature value computation is described below with reference to FIGS. 8A-B.

The input processor **12** may also use the historical data in the recent feature memory **36** to detect missing or corrupted input measurements. In response, the input processor **12** may ignore the corrupted input measurements and compute a value that tells the kernel array **14** that certain measurements are missing for the current time trial. For example, if multiple measured input values **30** are summed into one input feature value **34,** the input processor **12** may compute a quantum count that indicates the number of valid measurements that are included in the input feature value. Alternatively, the input processor **12** may normalize the input feature values **34** to take out the effect of missing measured input values **30.** The input processor **12** may then pass the normalized input feature values **34** to the kernel array **14.**

The input processor **12** transmits the input feature values **34** to the multi-kernel array **14.** In hardware embodiments, a separate conductor may be provided for each input feature value **34** so that the input feature values are simultaneously transmitted to a multi-kernel array **14** that operates as a parallel processing neural network. The multi-kernel array **14** computes output feature values **38** based on the input feature values **34** and connection weights **40** that are stored in the learned parameter memory **26.** Because the input-output configuration of each kernel of the multi-kernel array **14** may be changed from time to time by the manager **16,** the multi-kernel array **14** receives connection specifications **42** supplied by the manager **16.** The connection specifications **42** typically indicate the number of inputs and outputs for each kernel, and may also determine which input feature values **34** are provided to each kernel. In hardware embodiments, therefore, the connection specifications **42** may drive logic gates that control the routing of the input feature values **34** to the various kernels of the multi-kernel array **14.**

The connection weights **40** represent learned regression coefficients based on a covariance matrix that relates the output feature values **38,** which are treated as dependent variables, to the input feature values **34,** which are treated as independent variables. In other words, the multi-kernel array **14** computes each output feature value **38** as a weighted sum of the input feature values **34** in which the connection weights **40** are the elements of a covariance matrix. The connection weights **40** are learned through regression analysis applied to the input feature values **34** and the output feature values **38** for historical time trials. To perform connection weight learning simultaneously with output feature value prediction, during each time trial the connection weights **40** are retrieved from the learned parameter memory **26,** used to predict output feature values, and updated for the new information received during the time trial. The updated connection weights **40** are then stored back in the learned parameter memory.

More specifically, each kernel of the multi-kernel array **14** applies the inverse of the covariance matrix to its respective input feature values **34** to compute its respective output feature values **38.** The kernel may perform this operation by updating the covariance matrix and then inverting the updated covariance matrix. In this case, the connection weights **40** stored in the learned parameter memory **26** are based on inverting the elements of the covariance matrix. Inverting the covariance matrix, however, is a computationally intensive manipulation that is preferably avoided. Instead, the kernel may directly update the inverse covariance matrix, in which case the connection weights **40** stored in the learned parameter memory **26** are based directly on the elements of the inverse covariance matrix. Because hardware connections required to perform a matrix inversion are avoided, maintaining the inverse covariance matrix rather than the covariance matrix significantly increases the speed of kernel operations and simplifies the physical configuration of the hardware embodiments of the kernel.

Accordingly, each kernel of the multi-kernel array **14** preferably operates in a predicting-learning cycle for each time trial using an inverse covariance matrix to compute learned regression coefficients. The preferred structure of a hardware embodiment of a single kernel configured to update the inverse covariance matrix, the use of the inverse covariance matrix to compute regression coefficients, and the mathematical derivation supporting the structure, are described in the commonly owned United States Patent No. , entitled "Concurrent Learning And Performance Information Processing System," inventor Robert J. Jannarone, filed on November 2, 1994, and issued on . This patent, which is currently pending as United States Patent Application No. 08/333,204, is incorporated herein by reference.

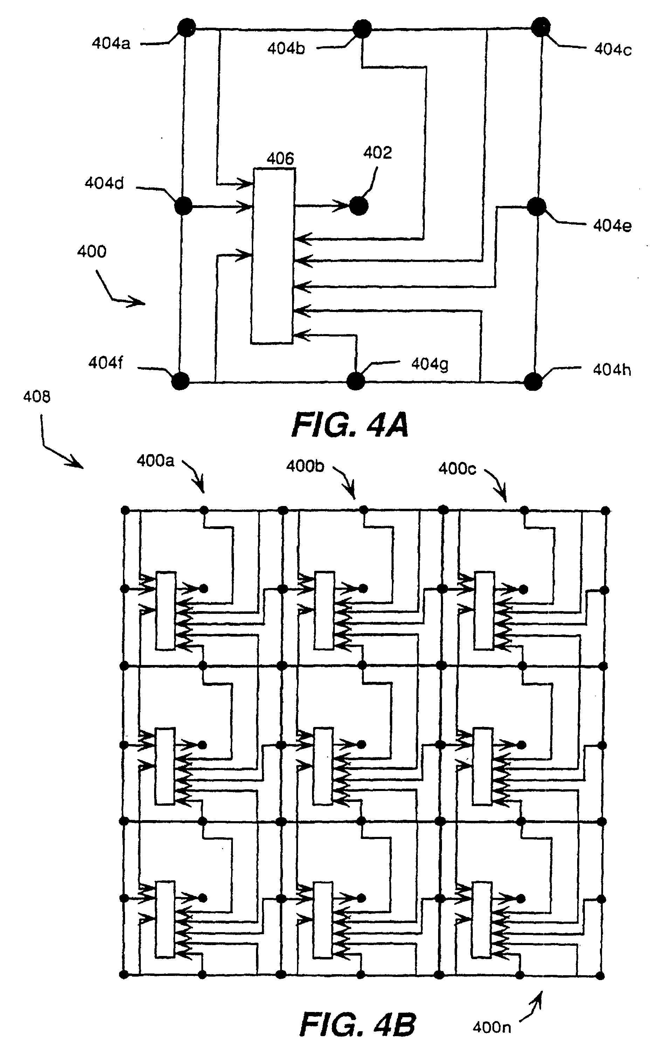

The multi-kernel array **14** may be organized into various types of sub-arrays to tailor the CIP **10** to various types of physical applications. Examples of specific sub-array structures are described with reference to FIGS. 4-6, and other specific structures will become evident to those skilled in the art as they design CIP machines for different physical applications in the future. The operation of each kernel of the various sub-arrays is similar, except that operation of monitoring kernels differs somewhat from the operation of forecasting kernels. To facilitate a description of this distinction, the multi-kernel array **14** is shown in FIG. 1 with a monitoring sub-array **22** and a forecasting sub-array **24.**

During each time trial, the monitoring sub-array **22** imputes input and/or output feature values **38** for the current time trial. These imputed feature values are used to compute deviance values for the current time trial and to supply imputed feature values for missing or out-of-tolerance feature values **38,** if necessary. The forecasting sub-array **24** predicts output feature values for future time trials. Because the monitoring sub-array **22** imputes input and/or output feature values **38** for the current time trial, its purpose would be defeated if the monitoring sub-array **22** learned (i.e., updated its respective connection weights) before it imputed the input and/or output feature values **38** for the current time trial. For this reason, the monitoring sub-array **22** operates on a predicting-learning cycle for each time trial. The forecasting sub-array **24,** on the other hand, predicts output feature values **38** for the future time trial. The forecasting sub-array **24** therefore operates on a learning-predicting cycle for each time trial because it benefits from learning from the current time trial before predicting.

In addition, the monitoring sub-array **22** preferably predicts before the forecasting sub-array **24** learns. Although the forecasting sub-array **24** preferably learns using output feature values **38** based on valid measured data for the current time trial rather than imputed output feature values **38,** the monitoring sub-array **22** may detect missing or corrupted data. For the input and/or output feature values **38** corresponding to the missing or corrupted data for the current time trial, the forecasting sub-array **24** preferably learns using the imputed input and/or output feature values **38** computed by the monitoring sub-array **22** rather than input and/or output feature values **38** based on the invalid measured data. Because the imputed input and/or output feature values **38** are computed by the monitoring sub-array **22,** the forecasting sub-array **24** preferably learns after the monitoring sub-array **22** preferably predicts.

To speed the availability of the predicted output feature values **24** computed by the forecasting sub-array **24,** the learning phase of the predicting-learning cycle for the monitoring sub-array **22** may be delayed until the end of the learning-predicting cycle for forecasting sub-array. That is, the monitoring sub-array **22** preferably learns after the forecasting sub-array **24** completes its learning-predicting cycle for the current time trial. The resulting operating cycle for each time trial is imputation prediction (prediction phase in the monitoring sub-array **22**), forecasting learning (learning phase in the forecasting sub-array **24**), forecasting prediction (prediction phase in the forecasting sub-array **24**), and imputation learning (learning phase in the monitoring sub-array **22**).

The output feature values **38** are returned to an output processor **44** of the transducer **12** that transforms the output feature values into computed output values **46** in accordance with output feature specifications **49** supplied by the manager **16.** Although the output processor **44** may perform a wide variety of operations, at least some of the operations are typically the inverse of the mathematical operations performed by the input processor **32.** This allows at least some of the computed output values **46** to correspond to some of the measured input values **30.** Comparing predicted values to measured values allows the CIP **10** to measure the accuracy of its predicting performance. For example, in a CIP configured to predict electricity demand based on weather forecast data, the measured input values **30** may include metered electricity demand data and weather forecast data. In this case, the computed output values **46** may include predicted electricity demand data. This allows the predicted electricity demand data computed for a current time trial to be compared to the corresponding metered electricity demand data received during a future time trial. The CIP is thus configured to measure the accuracy of its electricity demand forecast.

The computed output values **46** are then transmitted to a response unit **18** that may perform a variety of monitoring, forecasting, and control operations in response to the output values. For example, the response unit **18** typically displays the computed output values **46** on a display device. Simply displaying the computed output values **46** may be sufficient for systems in which further user interpretation is appropriate before any concrete actions are taken based on the output values. For a CIP configured to predict a commodity price index, for example, a trader may refer to the output values along with other relevant information not provided by the CIP, such as the amount money available to invest, before making an investment decision.

In other situations, the response unit **18** may take actions automatically in response to the computed output values **46.** The response unit **18** may automatically perform a deviance operation such as indicating an alarm condition, for instance, in response to a computed output value **46** that is out of a predefined tolerance. The CIP **10** may automatically take other deviance operations in response to other out-of-tolerance values, such as metered input values **30** and input feature values **34.** In particular, the CIP **10** may respond to an out-of-tolerance input value by using an imputed feature value rather then a feature value based on invalid measured or missing data in subsequent computations.

The response unit **18** may also be configured to take automatic control operations in response to the computed output values **46.** Of course, the particular automatic control operations will depend on the physical application for which the CIP **10** has been configured. In a municipal water system, water supply valves may be automatically actuated in response to predicted tank levels. In a strain testing device, the strain-applying equipment may be automatically reversed in response to predicted strain gauge values. In a electricity demand forecasting system, electric generators may be brought on-line in response to predicted electricity demand values. Other automatic control operations appropriate for CIP systems configured for other physical applications will become evident to those skilled in the art as they design CIP machines for different physical applications in the future.

The CIP **10** repeats the learning-predicting cycle described above in a steady-state mode for multiple time trials until refinement operations are indicated. Many thousand operating cycles are typically repeated between refinement operations. During refinement operations, the manager **16** may reconfigure the CIP **10** in many ways, often in response to parameters and other instruction received through the user interface **20.** To aid the user, the manager **16** may output descriptive statistics and other information to the user interface **20** and receive user-definable values for predefined parameters through a menu-driven utility implemented by the user interface **20.** The manager **16** includes a coordinator **48** that integrates the information received from the user interface **20** with the other elements of the manager **16.**

The refinement operations performed by the manager **16** may be defined by a user or automatically computed by the manager **16.** Refinement operations typically include deleting ineffective feature values, combining redundant feature values, and specifying new feature values. These operations are performed in a connection controller **50** that analyzes the connections weights **40.** Connection weights that approach zero indicate ineffective feature values that the connection controller **50** may eliminate. Connection weights that approach the same value may indicate redundant feature value that the connection controller **50** typically replaces by single feature value having the average of the redundant values. As ineffective feature values are eliminated and redundant feature values are combined, the connection controller **50** makes feature value capacity available in the kernel array **14** and input-output capacity available in the transducer **12.** The connection controller **50** may therefore be configured to automatically select new measured input values, feature values, and output values for this freed-up capacity.

These new measured input values, feature values, and output values are typically selected from a predefined list provided through the user interface **20.** In this manner, the CIP **10** may be configured to systematically evaluate a large number of input-output combinations, eliminate those that are of little predictive value, and retain those that are of high predictive value. Over time, the CIP **10** may therefore identify the most useful measured inputs for given physical application from a large universe of candidate inputs. This is a powerful refinement technique in situations in which a large number of candidate inputs are available, but it is not known which input values will be of predictive value. For example, this type of refinement technique would be useful in culling through a large number of economic statistics to identify the most useful statistics for predicting the price of a particular commodity. In this situation, the CIP **10** may identify covariance relationships that are not intuitively obvious among the economic statistics and the particular commodity price.

The connection controller **50** also performs an operation referred to as "technical correction" to address numerical problems that can occur in the multi-kernel array **14** when connection weights become either too small or too large and thereby cause certain numerical values or calculations to become unstable. The connection controller **50** is configured to identify a connection weight that is tending toward an unstable state and to limit the value, typically by replacing the computed connection weight with a predefined minimum or maximum value.

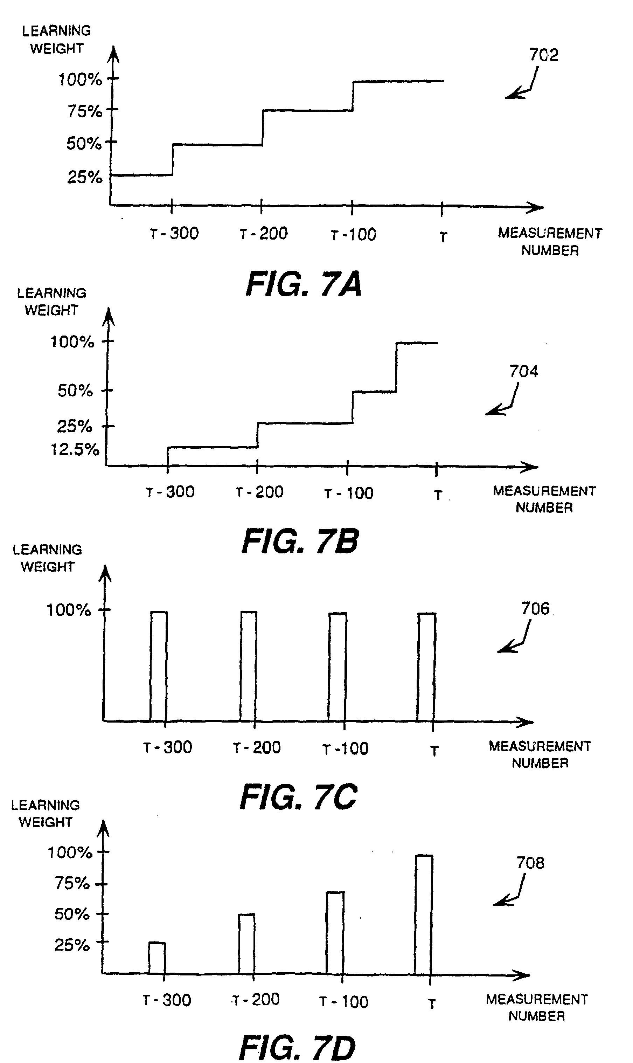

The manager **16** also includes a feature function controller **52** that provides the input feature specifications **35** to the input processor **32,** and the output feature specifications **49** to the output processor **44,** of the transducer **12.** The manager **16** also includes a learning weight controller **54** that provides learning weight schedules **55** for updating the connection weights **40.** Several example learning weight schedules are described below with reference to FIGS. 7A-D. The manager **16** also includes an executive **56** that controls the timing of the operation of the various components of the CIP **10.** Although the refinement operations may be automatic, the CIP **10** may also be configured to allow a technician to control the refinement operations through the user interface **20.** The flexibility enabled by the user interface **20** for controlling the refinement operations may be varied depending on the user's needs.

FIG. 2 illustrates a typical sub-array structure **200** for the CIP **10.** The structure includes a number of kernels, represented by kernel "A" **202a** through kernel "N" **202n,** each with an associated learned parameter memory, represented by learned parameter memory "A" **204a** through learned parameter memory "N" **204n.** This sub-array structure facilitates connection weight exchange in hardware embodiments in which individual kernels and their associated learned parameter memories are located on the same chip. Because the software embodiments are preferably configured as object-oriented analogs of corresponding hardware embodiments, the sub-array structure **200** is also preferred for software embodiments of the invention. Nevertheless, other sub-array structures may be feasible for other configurations.

FIG. 3 illustrates an analogy between the CIP **10** and the information processes **300** of a thinking organism. This analogy is not intended to assert that the CIP **10** functions precisely like the information processes of a thinking organism. Rather, the analogy is intended to point out some comparisons that may be instructive in understanding the CIP structure. Referring to FIGS. I and 3, the measured input values **30** of the CIP **10** may be analogized to the sensory input **302** of the thinking organism. The computed output values **30** of the CIP **10** may be analogized to the cognitive response **304** of the thinking organism. The recent feature memory **36** of the CIP **10** may be analogized to the short-term memory of the thinking organism. The transducer **12** of the CIP **10** may be analogized to the sensory processes of the thinking organism. The kernel array **14** may be analogized to the autonomic processes of the thinking organism. The learned parameter memory **26** may be analogized to the long-term memory of the thinking organism. And the manager **16** may be analogized to the cerebral processes of the thinking organism.

In this analogy, the steady-state learning-predicting cycle of the CIP **10** may be analogized to the awake, cognitive functions of the thinking organism. The refinement operations of the CIP **10,** on the other hand, may be analogized to the functions of the thinking organism that occur during sleep. Like an awake thinking organism, the CIP **10** simultaneously learns and predicts as it receives and responds to inputs. And like an asleep thinking organism, the CIP **10** periodically refines its information processes in response to discrete units of historical experiences. And so, like a thinking organism, the life cycle of the CIP **10** is a repeating cycle of "awake" steady-state periods followed by "asleep" refinement periods.

FIG. 4A illustrates a kernel structure **400** for a multi-kernel array in which the kernels are organized to correspond to a spatial configuration of inputs and outputs. This type of structure may be useful for an image processing system configured to impute the intensity of pixels for which the intensity information is missing or corrupted. In a video sequence of images, for example, the image processing system uses valid data for neighboring pixels over a series of time trials, in this case video frames, to impute the value of missing or corrupted pixel data.

The kernel structure **400** is dedicated to an individual pixel **402** that is located in the center of FIG. 4A. Pixels **404a-h** represent eight neighboring pixels in a raster image. The intensity of each neighboring pixel **404a-h** is provided as an input to a kernel **406.** The output of the kernel **406** may be used to drive the intensity of the center pixel **402.** In this manner, the kernel **406** may be used to impute the intensity of the pixel **402** based on the intensities of the neighboring pixels **404a-h.** This allows the kernel **406** to impute the intensity of the center pixel **402** when the measured intensity data is missing or corrupted.

FIG. 4B illustrates a multi-kernel processing array **408** in which the kernel structures **400a-n** are organized to correspond to a spatial configuration of inputs and outputs. Each kernel structure **400a-n** is configured like the kernel structure **400** described with respect to FIG. 4A. The multi-kernel array **408** thus includes a lattice of kernel structure **400a-n** that cerresponds to the pixel structure of the underlying raster image. It should be understood that, for the sake of clarity in the illustration, FIG. 4B shows the kernel structure **400** for only half of the pixels of the raster image.

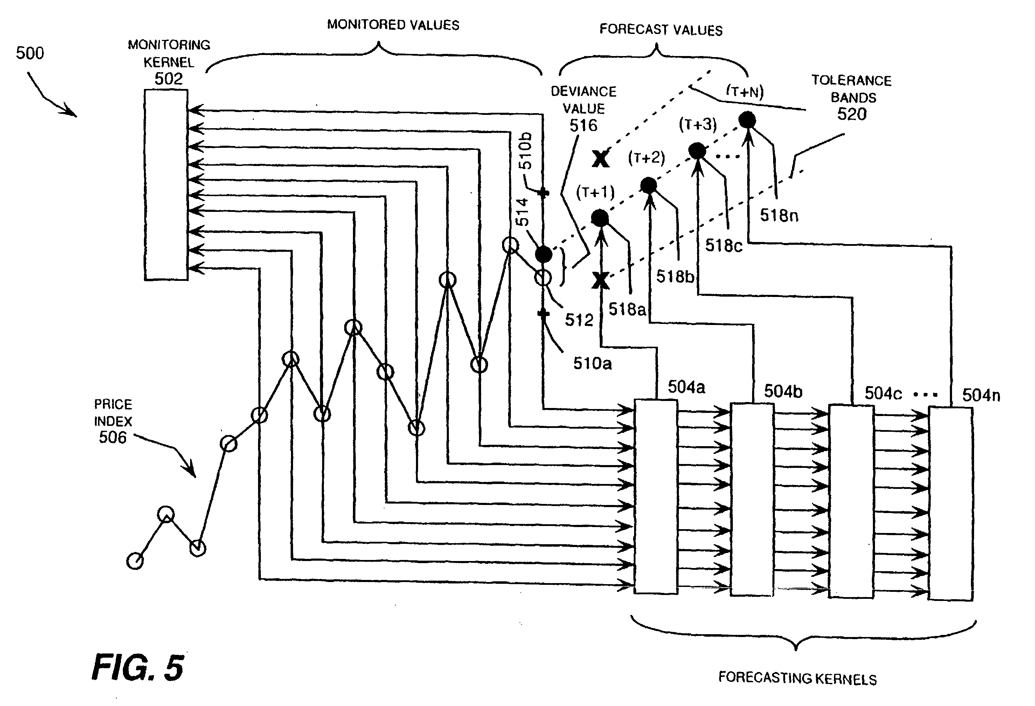

FIG. 5 illustrates a multi-kernel processing array **500** in which the kernels are organized to correspond to a temporal configuration of inputs and outputs. This type of structure may be useful for a commodity price forecasting system configured to predict the price of a commodity based on the historical price trend for the commodity. Although the historical price trend for the commodity is the only measured input shown in FIG. 5, other inputs, .such as indices for other commodities, currencies, and other types of information could also be included.

The multi-kernel processing array **500** includes a monitoring kernel **502** and several forecasting kernels **504a-n** that are each dedicated to computing the commodity price index **506** for a mutually-exclusive future time point. During a current time trial "t" for example, the monitoring kernel **502** imputes the commodity price index **506** for the current time trial, kernel **504a** predicts the commodity price index for a future current time trial "t+1," kernel **504b** predicts the commodity price index for another future current time trial "t+2," and so forth. The measured values are illustrated as hollow dots, and the forecast values are illustrated as solid dots.

The monitoring kernel **502** also computes tolerance values **510a-b** for the imputed value **512** for the current time trial. The tolerance values **510a-b** are typically computed as one or two standard deviations from the imputed value **512.** The monitoring kernel **502** may also compute a deviance value **516** as the difference between the imputed value **512** and the measured value **514** for the commodity price index during the current time trial. The deviance value **516** may be used to determine when the measured value **514** is most likely missing or corrupted. In the case of a missing or corrupted measured value **514,** the imputed value **512** may be used in subsequent computations, such as the computations performed by the forecasting kernels **504a-n** during the current time trial. The imputed value **512** may also be used by the monitoring kernel **502** and the forecasting kernels **504a-n** in subsequent time trials.

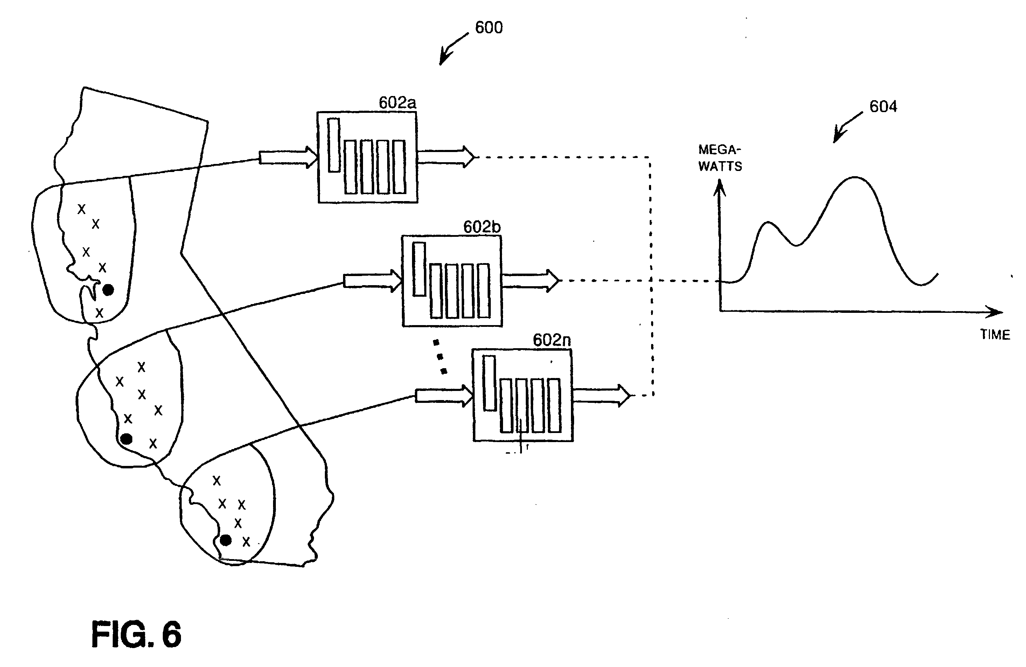

FIG. 6 illustrates a multi-kernel processing array **600** in which the kernels are organized to correspond to a combined spatial and temporal configuration of inputs and outputs. This type of structure may be useful for an electricity forecasting system configured to predict the electricity demand based on the current level of electricity demand, current weather data, and weather forecast data. The multi-kernel processing array **600** includes a group of sub-arrays **602a-n** in which each sub-array includes a monitoring kernel and several forecasting kernels. Thus, each sub-array is similar in structure to the multi-kernel processing array **500** described above with reference to FIG. 5. Each sub-array **602a-n** produces an electricity demand forecast for a geographic area, such as an area served by a typical electric power distribution substation or delivery point, based on metered electric demand data, metered weather data, and weather forecast data for the relevant geographic area.

Moreover, the sub-arrays **602a-n** are organized in a spatial configuration similar to the kernel array **408** described with reference to FIGS. 4A-B. For the multi-kernel processing array **600,** however, each sub-array covers a specific geographic area. This structure may therefore be used to construct an electricity demand forecasting system for an entire electricity service area, with one sub-array assigned to each distribution substation or delivery point. The outputs of the sub-arrays **602a-n** may then be summed to produce an aggregate electricity demand forecast **604** for the entire service area. It should be understood that the multi-kernel processing array **600** need not be applied to a geographically contiguous service area, but may also be used for an electricity service profile including a number of geographically separated service delivery points, such as a number of municipalities, a number of discrete business or industrial sites, a number of islands, and so forth.

FIGS. 7A-D illustrates typical learning weight schedules for updating the connection weights **40** in the CIP 10. A common learning weight schedule may be applied to all of the connection weights, an individual learning weight schedule may be applied to each individual connection weight, or the connection weights may be organized into a number of groups with each group having a common learning weight schedule.

The learning weight schedule **702** shown in FIG. 7A is an aggressive schedule in that it gives greater weight to measurements received during more recent time trials. The learning weight schedule **704** shown in FIG. 7B is more aggressive than the learning weight schedule **702** in that learning weight schedule **704** gives even greater weight to measurements received during more recent time trials. Aggressive learning weight schedules are appropriate when the computed output values tend to change relatively quickly over the number of time trials represented in the learning weight schedule.

FIG. 7C illustrates a learning weight schedule **706** in which learning is based only on certain time trials that occur on a cyclic basis. This type of learning weight schedule might be appropriate for a peak load electricity forecasting system in which the weighted time trials correspond to peak load periods. FIG. 7D illustrates a learning weight schedule **708** that is similar to schedule **706** except that it has been modified so that more recent time trials are weighted more aggressively. Other types of learning weight schedules will become evident to those skilled in the art as they design CIP machines for different physical applications.

FIG. 8A illustrates a typical input feature function applied in the transducer **12** of the CIP **10.** In this input feature function, the input feature values correspond to the coefficients of a polynomial **804** approximating a function defined by measured input values. For example, an electricity demand signal may be a measured input value **806,** and the coefficients corresponding to polynomial **804** may be the input feature values **808** computed by the transducer **12.** This type of input feature function relies on measured input values over a significant number of time trials to construct a polynomial **804** of suitable length. A historical record of measured input values is therefore stored in the recent feature memory **36** shown in FIG. 1

The input feature function illustrated in FIG. 8A is appropriate for a series of measured input values that defines a repeating pattern that may be reliably approximated by a polynomial, such as an electricity demand signal for a typical geographic area. Other types of measured input values may form repeating patterns in other function domains. For this reason, the input feature values computed by the transducer **12** may correspond to the coefficients of a differential equation, a frequency-domain function, or another type of function that may be suitable for a particular measured input value.

FIG. 8B illustrates a CIP **820** configured to compute electricity demand forecasts from electricity demand measurements and weather forecast data, which preferably includes measured current weather data and short-term weather forecast data. The CIP **820** thus produces an electricity demand forecast **822** based on input values **824** including metered electric demand data, metered weather data, and weather forecast data. The multi-kernel array structure described with reference to FIG. 6, the learning weight schedules described with reference to FIGS. 7A-D, and the input feature function **803** described with reference to FIG. 8A are presently to believed to be suitable for the electricity demand forecasting CIP **820.**

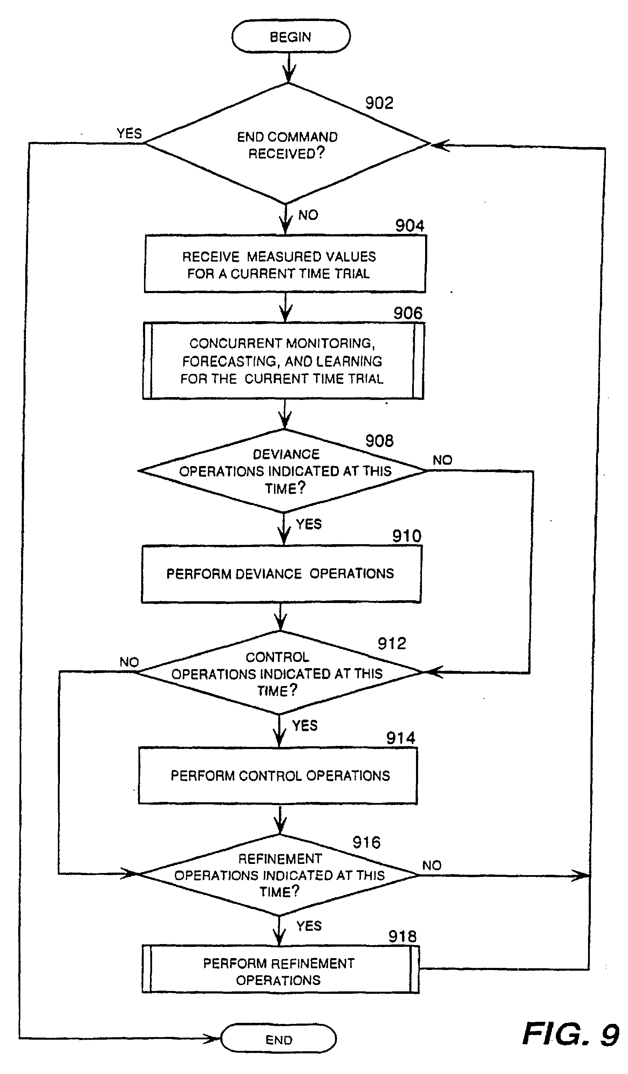

FIGS. 9-11 are logic flow diagrams that illustrate the operation of the CIP **10.** The description of these figures will also refer to the functional block diagram of the CIP **10** shown on FIG. 1. FIG. 9 is a logic flow diagram illustrating a typical operating routine **900** for the CIP **10.** Routine **900** begins in step **902,** in which the CIP **10** determines whether an end command has been received, for example by checking for an "end of file" record. Although the CIP **10** checks for the end command at the beginning of a learning-predicting cycle, this inquiry could equivalently occur at the end of the learning-predicting cycle or at other places in routine **900.** For example, the CIP **10** could check for an end command that would allow processing to stop following a steady-state processing period and before the CIP **10** conducts refinement operations. If an end command has been received, the "YES" branch is followed from step **902** to the "END" step, and routine **900** terminates.

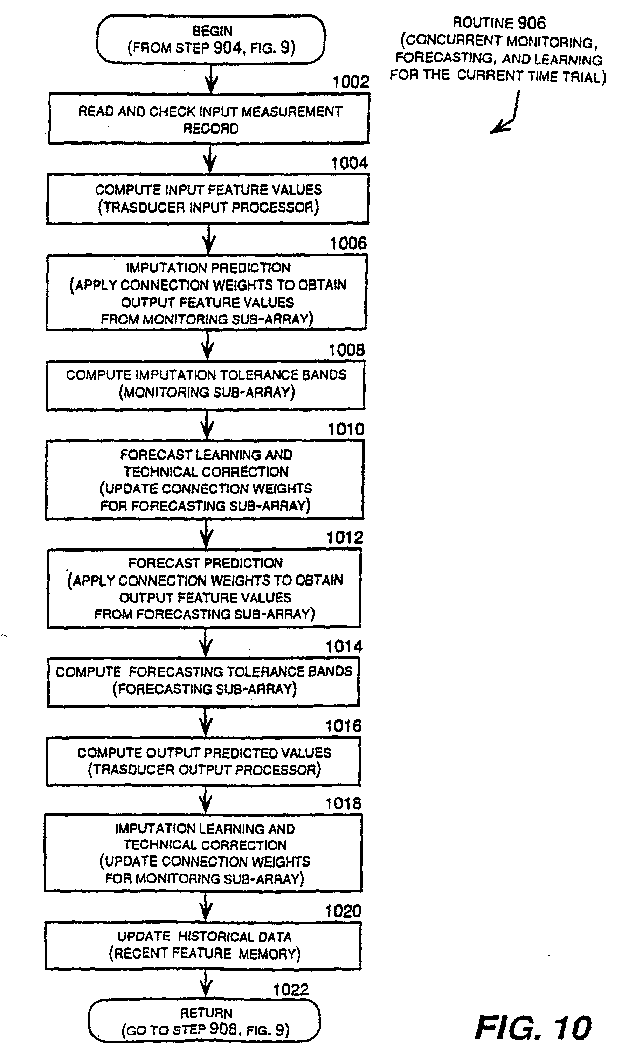

If an end command has not been received, the "NO" branch is followed from step **902** to step **904,** in which the CIP **10** receives measured input values **30** for a current time trial at the input processor **32** of the transducer **12.** Step **904** is followed by routine **906,** in which the CIP **10** performs concurrent monitoring, forecasting, and learning operations for the current time trial. Routine **906** is described below with reference to FIG. 10.

Routine **906** is followed by step **908,** in which the CIP **10** determines whether to perform deviance operations. If the CIP **10** determines that deviance operations should be conducted, the "YES" branch is followed from step **908** to the step **910,** in which the CIP **10** performs the deviance operations. These deviance operations typically include indicating an alarm condition and/or using imputed or predicted values rather than measured value in subsequent computations. It should be understood that a deviance operation (e.g., using an imputed feature value rather than a feature value based on a measured input value in subsequent computations) may also occur after the imputing phase in the monitoring sub-array **22** and before the learning phase in the forecasting sub-array **24.**

If the CIP **10** determines in step **908** that deviance operations should not be conducted, the "NO" branch is followed to step **912,** in which the CIP **10** determines whether control operations should be conducted, typically by the response unit **18.** Step **912** also follows the step **910.** If the CIP **10** determines that control operations should be conducted, the "YES" branch is followed from step **912** to the step **914,** in which the CIP **10** performs the control operations. These control operations typically include displaying the predicted output values **46** and may also include taking automatic response actions, such as opening valves, altering data packet routing instructions, actuating switches, and the like.

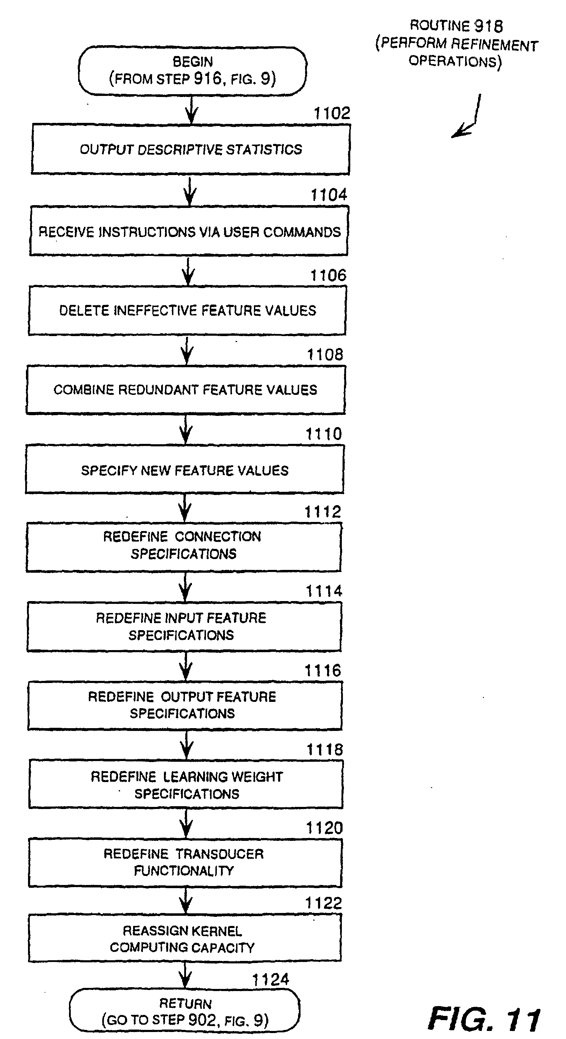

If the CIP **10** determines in step **912** that control operations should not be conducted, the "NO" branch is followed to step **916,** in which the CIP **10** determines whether refinement operations should be conducted by the manager **16.** Step **916** also follows the step **914.** If the CIP **10** determines that refinement operations should be conducted, the "YES" branch is followed from step **916** to the routine **918,** in which the CIP performs the control operations. Routine **918** is described below with reference to FIG. 11. Following routine **918,** routine **900** loops to step **902,** and routine **900** repeats in a steady-state mode for another time trial.

FIG. 10 is a logic flow diagram illustrating routine **906** for monitoring, forecasting, and learning in the CIP **10.** Routine **906** follows step **904** shown on FIG. 9. In step **1002,** the CIP **10** reads and checks a record including measured input values **30** for the current time trial. If the check conducted in step **1002** indicates that the record is invalid, routine **906** may skip the record, abort processing, indicate an alarm condition, or take other predefined actions. Step **1002** is followed by step **1004,** in which the input processor **32** of the transducer **12** assembles a vector of input feature values **34** based on the measured input values **30** and input feature specifications **35** provided by the feature function controller **52.** Typical input feature specifications are described above with reference to FIG. 8A.

Step **1004** is followed by step **1006,** in which the monitoring sub-array **22** performs imputation prediction. Step **1006** involves imputing input and/or output feature values for the current time trial. For the example shown in FIG. 5, in step **1006** the monitoring sub-array **22** imputes the output feature value **512** for the current time trial. To impute the input and/or output feature values for the current time trial, the monitoring sub-array **22** retrieves the connection weights **40a** from the learned parameter memory **26a** and applies the connection weights **40a** to the input feature values **34** to compute imputed output feature values **38.**

Step **1006** is followed by step **1008,** in which the monitoring sub-array **22** computes tolerance bands for imputed feature values. For the example shown in FIG. 5, in step **1008** the monitoring sub-array **22** computes the tolerance values **514a-b** for the current time trial. The tolerance values are typically computed as one or two standard deviations from the imputed feature values for the current time trial.

Step **1008** is followed by step **1010,** in which the forecasting sub-array **24** performs learning and technical correction using the input feature values **34** for the current time trial. Step **1010** involves updating the connection weights **40b** stored in the learned parameter memory **26b,** preferably by updating the regression coefficients based on an inverse covariance matrix using a learning weight schedule **55** provided by the learning weight controller **54.** The connection weights **40b** stored in the learned parameter memory **26b** preferably correspond to the regression coefficients based on the inverse covariance matrix. The forecasting sub-array **24** retrieves and updates the connection weights **40b.** The updated connection weights **40b** are then returned to the learned parameter memory **26b.**

Before the updated connection weights **40b** are returned to the learned parameter memory **26b,** the connection controller **50** may perform technical correction on the updated connection weights **40b** to avoid numerical problems that could otherwise stall the CIP **10.** As noted previously, the connection controller **50** is configured to identify a connection weight that is tending toward an unstable state and to limit the value, typically by replacing the computed connection weight with a predefined minimum or maximum value.

Step **1010** is followed by step **1012,** in which the forecasting sub-array **24** performs forecast prediction. Step **1012** involves predicting output feature values **38** for future time trials. For the example shown in FIG. 5, in step **1012** the forecasting sub-array **24** predicts the output values **518a-n** for the future time trials "t+1" through "t+n." To predict the output feature values **38** for the future time trials, the forecasting sub-array **24** retrieves the updated connection weights **40b** from the learned parameter memory **26b** and applies the connection weights **40b** to the input feature values **34** to compute the predicted output feature values **38.**

Step **1012** is followed by step **1014,** in which the forecasting sub-array **24** computes tolerance bands for the predicted output feature values **38.** For the example shown in FIG. 5, in step **1014** the forecasting sub-array **24** computes the tolerance bands **520** for the future time trials "t+1" through "t+n." The tolerance bands are typically computed as one or two standard deviations from the predicted output values **38** for the future time trials.

Step **1014** is followed by step **1016,** in which the output processor **44** of the transducer **12** computes the output values **46** based on the output feature values **38** computed by the forecasting sub-array **24** and the monitoring sub-array **22.** Although the output processor **44** may perform a wide variety of operations in step **1016,** at least some of the operations are typically the inverse of the mathematical operations performed by the input processor **32** in step **1004.** This allows at least some of the computed output values **46** to correspond to some of the measured input values **30.** Comparing predicted values to measured values allows the CIP **10** to measure the accuracy of its predicting performance.

Step **1016** is followed by step **1018,** in which the monitoring sub-array **24** performs learning and technical correction using the input feature values **34** for the current time trial. Step **1018** involves updating the connection weights **40a** stored in the learned parameter memory **26a,** preferably by-updating the regression coefficients based on an inverse covariance matrix using a learning weight schedule **55** provided by the learning weight controller **54.** The connection weights **40a** stored in the learned parameter memory **26a** preferably correspond to the regression coefficients based on the inverse covariance matrix. The monitoring sub-array **22** retrieves and updates the connection weights **40a.** The updated connection weights **40a** are then returned to the learned parameter memory **26a.**

Before the updated connection weights **40a** are returned to the learned parameter memory **26a,** the connection controller **50** may perform technical correction on the updated connection weights **40b** to avoid numerical problems that could otherwise stall the CIP **10.** Step **1018** is followed by step **1020,** in which the historical data in the recent feature memory **36** is updated, typically on a first-in-first-out basis. Other parameters may be saved or updated in step **1020,** as appropriate, to prepare the CIP **10** for the next time trial. Step **1020** is followed by step **1022,** which returns to step **908** shown on FIG. 9.

FIG. 11 is a logic flow diagram illustrating the input-output refinement routine **918** for the CIP **10.** Routine **918** follows step **916** shown on FIG. 9. It should be understood that all of the steps of routing **918** are not necessarily performed each time the CIP **10** performs refinement operations. Rather, routine **918** is as a list of refinement operations that the CIP **10** may perform, as needed. The need for a particular refinement operation may be determined automatically by the manager **16,** or may be determined by a user and communicated to the CIP **10** via the user interface **20.** Varying levels of flexibility may be enabled by the user interface **20** for refinement operations, depending on the user's needs.

In step **1102,** the coordinator **48** of the manager **16** outputs descriptive statistics to the user interface **20.** Step **1102** is followed by the step **1104,** in which the coordinator **48** receives user-defined instructions and other parameters from the user interface **20.** Step **1104** is followed by step **1106,** in which the connection controller **50** deletes ineffective feature values. Step **1106** is followed by the step **1108,** in which the connection controller **50** combines redundant feature values. Step **1108** is followed by the step **1110,** in which the connection controller **50** specifies new feature values.

As ineffective feature values are eliminated and redundant feature values are combined, the connection controller **50** makes feature value capacity available in the kernel array **14** and input-output capacity available in the transducer **12.** The connection controller **50** may therefore be configured to automatically select new measured input values, feature values, and output values for this freed-up capacity. These new measured input values, feature values, and output values are typically selected from a predefined list provided through the user interface **20.** In this manner, the CIP **10** may be configured to systematically evaluate a large number of input-output combinations, eliminate those that are of little predictive value, and retain those that are of high predictive value. Over time, the CIP **10** may therefore be configured to identify the most useful measured inputs for given physical application from a large universe of candidate inputs.

Accordingly, step **1110** is followed by step **1112,** in which the connection controller **50** redefines the connection specifications **42.** Step **1112** is followed by step **1114,** in which the feature function controller **52** redefines the input feature specifications **35.** The feature function controller **52** transmits the new input feature specifications **35** to the input processor **32** of the transducer **12.** Step **1114** is followed by step **1116,** in which the feature function controller **52** redefines the output feature specifications **49.** The feature function controller **52** transmits the new output feature specifications **49** to the output processor **44** of the transducer **12.** Step **1116** is followed by step **1118,** in which the learning weight controller **54** redefines the learning weight schedules **55.**

In view of the wide range of refinement operations described above, it will be appreciated that the manager **16** is operative to significantly reconfigure the functionality of the transducer **12,** and to significantly reconfigure the connections of the multi-kernel array **14.** In other words, the totality of the refinement operations described above allow the manager **16** to fundamentally reconfigure the CIP **10** for different physical applications. This flexibility is represented by step **1120,** in which the manager **16** reconfigures the functionality of the transducer **12,** and step **1120,** in which the manager **16** reassigns the computing capacity of the multi-kernel array **14.** Step **1122** is followed by step **1124,** which returns to step **902** shown on FIG. 9.

The present invention thus provides a multi-kernel neural network monitoring, forecasting, and control system that simultaneously learns and predicts in real time. The system includes effective input-output refinement processes that allow the system to reconfigure itself in response to measured performance and other factors. The refinement processes also allow the system be reconfigured in accordance with user commands for application to different physical applications. It should be understood that the foregoing pertains only to the preferred embodiments of the present invention, and that numerous changes may be made to the embodiments described herein without departing from the scope of the invention.

## Claims

1. A method for responding to computed output values (46) that are based on measured input values (30) received during a current time trial and during one or more historical time trials, including the steps of receiving one more iterations of the measured input values for the current and future time trials and assembling a vector of input feature values (34) based on the measured input values, **CHARACTERISED BY**:
(a) providing the vector of input feature values (34) to a recursive neural network multi-kernel processor (14), each kernel of the processor operative for:
receiving one or more of the input feature values (34).
retrieving connection specifications (42) defining mathematical relationships for computing one or more output feature values (38) based on the received input feature values.
retrieving a set of original connection weights (40a-b) representing regression coefficients among the received input feature values and the computed output feature values,
retrieving a set of learning weights (55) defining mathematical relationships for updating the connection weights based on the received input feature values,
computing the output feature values (38) based on the received input feature values (34), the connection weights (40a-b), and the connection specifications (42),
computing updated connection weights (40a-b) based on the received input feature values (34), the connection weights (40a-b), the connection specifications (42), and the learning weights (55), and
storing the updated connection weights (40a-b) as the connection weights for a subsequent time trial;
(b) assembling a vector of computed output values (46) based on the output feature values (38) computed by each kernel;
(c) determining whether refinement operations are indicated;
(d) if refinement operations are not indicated, repeating steps (a) through (c) for the subsequent time trial; and
(e) if refinement operations are indicated, performing one or more refinement operations selected from the group including:
recomputing the learning weights based on the measured input values and the computed output values for a plurality of time trials;
recomputing the connection specifications based on the measured input values and the computed output values for a plurality of time trials;
deleting ineffective input or output feature values;
combining redundant input or output feature values;
specifying new input or output feature values;
recomputing the input feature specifications based on the measured input values and the computed output values for a plurality of time trials;
recomputing the output feature specifications based on the measured input values and the computed output values for a plurality of time trials; and
reassigning functionality among the kernels.

2. The method of claim 1, wherein:
the connection weights (40a-b) comprise the elements of an inverse covariance matrix; and
the step of computing the updated connection weights comprises the step of updating the inverse covariance matrix.

3. The method of claim 1, wherein:
the connection weights (40a-b) comprise the elements of an inverse covariance matrix; and
the step of computing updated connection weights comprises the steps of,
updating a covariance matrix corresponding to the inverse covariance matrix, and
inverting the updated covariance matrix.

4. The method of any of claims 1 through 3, wherein the step of assembling the vector of input feature values (34) comprises the step of computing the input feature values based on the measured input values (30) and input feature specifications (35).

5. The method of any of claims 1 through 4, wherein the step of computing the input feature values (34) comprises a mathematical operation selected from the group including:
computing input feature values based on algebraic combinations of measured input values;
computing input feature values based on coefficients corresponding to a polynomial approximating a function defined by measured input values;
computing input feature values based on coefficients corresponding to a differential equation corresponding to a function defined by measured input values: and
computing input feature values based on coefficients corresponding to a frequency-domain function corresponding to a function defined by measured input values.

6. The method of any of claims 1 through 5, wherein the step of assembling the vector of computed output values (46) comprises the step of computing the output values based on the output feature values (38) and output feature specifications (49).

7. The method of any of claims 1 through 6, wherein the step of assembling the vector of computed output values comprises the step of performing a mathematical inverse of one of the mathematical operations performed on the measured input values.

8. The method of any of claims 1 through 7, wherein the step of computing the output feature values comprises the steps of:
imputing output feature values for the current time trial based on the input feature values for one or more historical time trials:
computing monitored output feature values based on the input feature values for the current time trial;
computing deviance values based on the imputed output feature values and the monitored output feature values; and
basing the computed output values on the monitored output feature values.

9. The method of any of claims 1 through 8, wherein the step of computing the output feature values comprises the step of predicting output feature values for future time trials.

10. The method of any of claims 1 through 8, wherein the multi-kernel array (14) comprises:
a monitoring sub-array (22) operative for:
imputing output feature values for the monitoring sub-array based on the input feature values for one or more historical time trials, the connection weights, and the connection specifications, and
computing updated connection weights (40a) for the monitoring sub-array based on the received input feature values, the connection weights, the connection specifications, and the learning weights; and
a forecasting sub-array (24) operative for:
computing output feature values for the forecasting sub-array based on the input feature values for one or more historical time trials, the updated connection weights, and the connection specifications, and
computing updated connection weights (40b) for the forecasting sub-array based on the received input feature values for the current time trial, the connection weights, the connection specifications, the learning weights, and the imputed output feature values.

11. The method of any of claims 1 through 9, further comprising the step of responding to the vector of computed output values (46) by:
comparing each deviance value to an associated threshold value; and
if one of the deviance values exceeds its associated threshold value, performing one or more deviance operations selected from the group including:
indicating an alarm condition, and
basing the computed output values on the imputed output feature value rather than the monitored output feature value for the output feature value associated with the deviance value that exceeds its associated threshold value.

12. The method of any of claims 1 through 11, further comprising the step of responding to the vector of computed output values by performing one or more control operations selected from the group including:
displaying a representation of the computed output values on a display device, and
actuating a controlled parameter to compensate for a condition indicated by the computed output values.

13. The method of any of claims 1 through 12, if refinement operations are indicated, further comprising the steps of:
recomputing the learning weights based on the measured input values and the computed output values for a plurality of time trials; and
recomputing the connection specifications based on the measured input values and the computed output values for a plurality of time trials.

14. The method of any of claims 1 through 13, if refinement operations are indicated, further comprising the steps of:
deleting ineffective input or output feature values;
combining redundant input or output feature values;
specifying new input or output feature values;
recomputing the input feature specifications based on the measured input values and the computed output values for a plurality of time trials;
recomputing the output feature specifications based on the measured input values and the computed output values for a plurality of time trials; and
reassigning functionality among the kernels.

15. The method of any of claims 1 through 14, wherein the multi-kernel processor (14) comprises:
an array (408) of spatially-dedicated kernels (400a-n) corresponding to a spatially-contiguous field from which input values are measured and for which output valued are predicted; and
each kernel configured to compute one of the computed output values based on a set of adjacent measured input values.

16. The method of claim 15, wherein:
each kernel of the multi-kernel processor (14) corresponds to a pixel in a visual image;
each measured input value corresponds to a measured intensity of one of the pixels of the visual image; and
each computed output value corresponds to a computed intensity of one of the pixels of the visual image.

17. The method of any of claims 1 through 14, wherein the multi-kernel processor (14) comprises:
an array (500) of temporally-dedicated kernels (504a-n) corresponding to a time-based index from which input values are measured and for which output values are predicted; and
each kernel configured to predict a mutually-exclusive one of the time-based index values based on the measured input values.

18. The method of claim 17, wherein:
each kernel of the multi-kernel processor corresponds to a mutually-exclusive time-specific price forecast for a commodity price index; and
each kernel configured to predict its corresponding mutually-exclusive time-specific price forecast based on the measured input values.

19. The method of claim 18, wherein the measured input values comprise:
the commodity price index; and
price indices for currencies and other commodities.

20. The method of claim any of claims 1 through 14, wherein the multi-kernel processor comprises:
a plurality (600) of kernel groups (602a-n) each comprising a plurality of temporally-dedicated kernels corresponding to a time-based index from which input values are measured and for which output valued are predicted;
each kernel group comprising a plurality of individual kernels, each configured to predict a component of a mutually-exclusive time-based index value based on the measured input values;
the plurality of groups of temporarily-dedicated kernels defining an array of spatially-dedicated kernel groups;
each kernel group configured to compute a component of the time-based index.

21. The method of claim any of claim 20, wherein:
the time-based index comprises an electricity demand index;
each kernel group corresponds to a plurality of electricity delivery points; and
the measured input values comprise electricity demand and weather data.

22. The method of claim any of claims 1 through 21, wherein the step of providing the vector of input feature values to a multi-kernel processor further comprises the steps of:
providing the vector of input feature values to a monitoring sub-array (22) and a forecasting sub-array (24);
imputing output feature values for the monitoring sub-array based on the input feature values for one or more historical time trials, the connection weights, and the connection specifications;
computing updated connection weights for the forecasting sub-array based on the received input feature values for the current time trial, the connection weights, the connection specifications, the learning weights, and the imputed output feature values;
computing output feature values for the forecasting sub-array based on the input feature values for one or more historical time trials, the updated connection weights, and the connection specifications; and
computing updated connection weights for the monitoring sub-array based on the received input feature values, the connection weights, the connection specifications, and the learning weights.

23. The method of claim 22, wherein:
the connection weights for the monitoring sub-array comprise the elements of an inverse covariance matrix for the monitoring sub-array; and
the step of computing the updated connection weights for the monitoring sub-array comprises the step of updating the inverse covariance matrix for the monitoring sub-array;
the connection weights for the forecasting sub-array comprise the elements of an inverse covariance matrix for the forecasting sub-array; and
the step of computing the updated connection weights for the forecasting sub-array comprises the step of updating the inverse covariance matrix for the forecasting sub-array.

24. The method of claim 22, wherein:
the connection weights for the monitoring sub-array comprise the elements of an inverse covariance matrix for the monitoring sub-array;
the step of computing updated connection weights for the monitoring sub-array comprises the steps of,
updating a covariance matrix for the monitoring sub-array corresponding to the inverse covariance matrix for the monitoring sub-array, and
inverting the updated covariance matrix for the monitoring sub-array;
the connection weights for the forecasting sub-array comprise the elements of an inverse covariance matrix for the forecasting sub-array; and
the step of computing updated connection weights for the forecasting sub-array comprises the steps of,
updating a covariance matrix for the forecasting sub-array corresponding to the inverse covariance matrix for the forecasting sub-array, and
inverting the updated covariance matrix for the forecasting sub-array.

25. A computer system including an input processor (12) configured for receiving an iteration of measured input values (30) for a current and future time trial and assembling a vector of input feature values (34) based on the measured input values, **CHARACTERISED BY**:
a recursive neural network multi-kernel array (14) coupled to the input processor and comprising:
a monitoring sub-array (22) operative for:
imputing output feature values for the monitoring sub-array based on the input feature values for one or more historical time trials, the connection weights, and the connection specifications, and
computing updated connection weights for the monitoring sub-array based on the received input feature values, the connection weights, the connection specifications, and the learning weights; and
a forecasting sub-array (24) operative for:
computing output feature values for the forecasting sub-array based on the input feature values for one or more historical time trials, the updated connection weights computed by the monitoring sub-array, and the connection specifications, and
computing updated connection weights for the forecasting sub-array based on the received input feature values for the current time trial, the connection weights, the connection specifications, the learning weights, and the imputed output feature values, said system further comprising:
means (26a-b) for storing the updated connection weights;
means (12) for providing access to the computed output feature values;
means (44) for assembling a vector of computed output values based on the output feature values computed by each kernel;
means (18) for responding to the vector of computed output values;
means (16) for determining whether refinement operations are indicated; and
means (16) for performing one or more refinement operations selected from the group including:
deleting ineffective input or output feature values;
combining redundant input or output feature values;
specifying new input or output feature values;
recomputing the input feature specifications based on the measured input values and the computed output values for a plurality of time trials;
recomputing the learning weights based on the measured input values and the computed output values for a plurality of time trials;
recomputing the connection specifications based on the measured input values and the computed output values for a plurality of time trials;
recomputing the output feature specifications based on the measured input values and the computed output values for a plurality of time trials; and
reassigning functionality among the kernels.

26. The computer system of claim 25, wherein each kernel of the multi-kernel array comprises:
means (22, 24) for receiving one or more of the input feature values;
means (22, 24) for retrieving connection specifications (42) defining mathematical relationships for computing one or more output feature values based on the received input feature values;
means (22, 24) for retrieving a set of connection weights (40a,b) representing regression coefficients among the received input feature values and the computed output feature values;
means (22, 24) for retrieving a set of learning weights (55) defining mathematical relationships for updating the connection weights based on the received input feature values;
means (22, 24) for computing output feature values (38) based on the received input feature values, the connection weights, and the connection specifications; and
means (22, 24) for computing updated connection weights based on the received input feature values, the connection weights, the connection specifications, and the learning weights.

27. The computer system of any of claim 25 or claim 26, wherein:
the connection weights (40a-b) comprise the elements of an inverse covariance matrix; and
the step of computing the updated connection weights comprises the step of updating the inverse covariance matrix.

28. The computer system of any of claims 25 or claim 26, wherein:
the connection weights (40a-b) comprise the elements of an inverse covariance matrix; and
the means for computing updated connection weights comprises means for updating a covariance matrix corresponding to the inverse covariance matrix and inverting the updated covariance matrix.

29. The computer system of any of claims 25 through 28, wherein the means for computing the output feature values comprises:
means (22) for imputing output feature values of the current time trial based on the input feature values for one or more historical time trials; and
means (24) for predicting output feature values for future time trials.

30. The computer system of any of claims 25 through 29, wherein the means for computing the output feature values comprises:
means (22) for imputing output feature values for the current time trial based on the input feature values for one or more historical time trials;
means (22) for computing monitoring output feature values based on the input feature values for the current time trial;
means (22) for computing deviance values based on the imputed output feature values and the monitored output feature values; and
means (24) for basing the computed output values on the monitored output feature values.

31. The computer system of any of claims 25 through 30, wherein the means (18) for responding to the vector of computed output values comprises:
means for comparing each deviance value to an associated threshold value; and
means for, if one of the deviance values exceeds its associated threshold value, performing one or more deviance operations selected from the group including,
indicating an alarm condition, and
basing the computed output values on the imputed output feature value rather than the monitored output feature value for the output feature value associated with the deviance value that exceeds its associated threshold value.

32. The computer system of any of claims 25 through 31, wherein the means (18) for responding to the vector of computed output values comprises means for performing one or more control operations selected from the group including,
displaying a representation of the computed output values on a display device, and
actuating a controlled parameter to compensate for a condition indicated by the computed output values.

33. The computer system of any of claims 25 through 32, further comprising:
means (54) for recomputing the learning weights based on the measured input values and the computed output values for a plurality of time trials; and
means (52) for recomputing the feature value specifications based on the measured input values and the computed output values for a plurality of time trials.

34. The computer system of any of claims 25 through 33, further comprising:
means (50) for deleting ineffective input or output feature values;
means (50) for combining redundant input or output feature values;
means (50) for specifying new input or output feature values;
means (50) for recomputing the connection specifications based on the measured input values and the computed output values for a plurality of time trials; and
means (50) for reassigning functionality among the kernels.

35. The computer system of any of claims 25 through 34, wherein the multi-kernel processor comprises:
an array (408) of spatially-dedicated kernels (400a-n) corresponding to a spatially-contiguous field from which input values are measured and for which output valued are predicted; and
each kernel configured to compute one of the computed output values based on a set of adjacent measured input values.

36. The computer system of claim 35, wherein:
each kernel of the multi-kernel processor corresponds to a pixel in a visual image;
each measured input value corresponds to a measured intensity of one of the pixels of the visual image; and
each computed output value corresponds to a computed intensity of one of the pixels of the visual image.

37. The computer system of any of claims 25 through 34, wherein the multi-kernel processor comprises:
an array (500) of temporally-dedicated kernels (504a-n) corresponding to a time-based index from which input values are measured and for which output values are predicted; and
each kernel configured to predict a mutually-exclusive one of the time-based index values based on the measured input values.

38. The computer system of claim 37, wherein:
each kernel of the multi-kernel processor corresponds to a mutually-exclusive time-specific price forecast for a commodity price index; and
each kernel configured to predict its corresponding mutually-exclusive time-specific price forecast based on the measured input values.

39. The computer system claim 38, wherein the measured input values comprise:
the commodity price index; and
price indices for currencies and other commodities.

40. The computer system of any of claims 25 through 34, wherein the multi-kernel processor comprises:
a plurality (600) of kernel groups (602a-n) each comprising a plurality of temporally-dedicated kernels corresponding to a time-based index from which input values are measured and for which output valued are predicted;
each kernel group comprising a plurality of individual kernels, each configured to predict a component of a mutually-exclusive time-based index value based on the measured input values;
the plurality of groups of temporally-dedicated kernels defining an array of spatially-dedicated kernel groups;
each kernel group configured to compute a component of the time-based index.

41. The computer system of claim 40, wherein:
the time-based index comprises an electrically demand index;
each kernel group corresponds to a plurality of electricity delivery points; and
the measured input values comprise electricity demand and weather data.

42. Apparatus adapted for performing the method of any of claims 1-24.

43. A computer storage medium containing computer-executable instructions for performing the method of any of claims 1-24.

## Patentansprüche

1. Verfahren zum Ansprechen auf berechnete Ausgabewerte (46), die auf gemessenen Eingabewerten (30) basieren, welche während eines gegenwärtigen Zeitversuchs und während eines oder mehrerer vorherige Zeitversuche empfangen wurden, umfassend die Schritte des Empfangens einer oder mehrerer Wiederholungen der gemessenen Eingabewerte für die gegenwärtigen und zukünftigen Zeitversuche und Aufbauens eines Vektors von Merkmalseingabewerten (34) auf der Basis der gemessenen Eingabewerte, **gekennzeichnet durch**:
(a) Bereitstellen des Vektors von Merkmalseingabewerten (34) für einen Mehrkernprozessor (14) eines rekursiven neuronalen Netzwerks, wobei jeder Kern des Prozessors fähig ist zum:
Empfangen eines oder mehrerer der Merkmalseingabewerte (34);
Abrufen von Verbindungsspezifikationen (42), welche mathematische Beziehungen zum Berechnen eines oder mehrerer Merkmalsausgabewerte (38) auf der Basis der empfangenen Merkmalseingabewerte definieren;
Abrufen eines Satzes von ursprünglichen Verbindungsgewichten (40a-b), welche Regressionskoeffizienten unter den empfangenen Merkmalseingabewerten und den berechneten Merkmalsausgabewerten darstellen;
Abrufen eines Satzes von Lerngewichten (55), welche mathematische Beziehungen zum Aktualisieren der Verbindungsgewichte auf der Basis der empfangenen Merkmalseingabewerte definieren;
Berechnen der Merkmalsausgabewerte (38) auf der Basis der empfangenen Merkmalseingabewerte (34), der Verbindungsgewichte (40a-b) und der Verbindungsspezifikationen (42);
Berechnen der aktualisierten Verbindungsgewichte (40ab) auf der Basis der empfangenen Merkmalseingabewerte (34), der Verbindungsgewichte (40a-b), der Verbindungsspezifikationen (42) und der Lerngewichte (55); und
Speichern der aktualisierten Verbindungsgewichte (40ab) als die Verbindungsgewichte für einen nachfolgenden Zeitversuch;
(b) Aufbauen eines Vektors von berechneten Ausgabewerten (46) auf der Basis der Merkmalsausgabewerte (38), die **durch** jeden Kern berechnet werden;
(c) Feststellen, ob Verfeinerungsoperationen angezeigt werden;
(d) Wiederholen der Schritte (a) bis (c) für den nachfolgenden Zeitversuch, wenn keine Verfeinerungsoperationen angezeigt werden; und
(e) Durchführen, wenn Verfeinerungsoperationen angezeigt werden, einer oder mehrerer Verfeinerungsoperationen, die aus der Gruppe ausgewählt werden, welche umfasst:
Neuberechnen der Lerngewichte auf der Basis der gemessenen Eingabewerte und der berechneten Ausgabewerte für eine Mehrzahl von Zeitversuchen;
Neuberechnen der Verbindungsspezifikationen auf der Basis der gemessenen Eingabewerte und der berechneten Ausgabewerte für eine Mehrzahl von Zeitversuchen;
Löschen von unwirksamen Merkmalseingabe- oder -ausgabewerten;
Kombinieren von redundanten Merkmalseingabe- oder - ausgabewerten;
Bestimmen von neuen Merkmalseingabe- oder -ausgabewerten;
Neuberechnen der Merkmalseingabespezifikationen auf der Basis der gemessenen Eingabewerte und der berechneten Ausgabewerte für eine Mehrzahl von Zeitversuchen;
Neuberechnen der Merkmalsausgabespezifikationen auf der Basis der gemessenen Eingabewerte und der berechneten Ausgabewerte für eine Mehrzahl von Zeitversuchen; und
Neuzuordnen von Funktionalität unter den Kernen.

2. Verfahren nach Anspruch 1, wobei:
die Verbindungsgewichte (40a-b) die Elemente einer inversen Kovarianzmatrix umfassen; und
der Schritt des Berechnens der aktualisierten Verbindungsgewichte den Schritt des Aktualisierens der inversen Kovarianzmatrix umfasst.

3. Verfahren nach Anspruch 1, wobei:
die Verbindungsgewichte (40a-b) die Elemente einer inversen Kovarianzmatrix umfassen; und
der Schritt des Berechnens der aktualisierten Verbindungsgewichte den Schritt des Aktualisierens einer Kovarianzmatrix, welche der inversen Kovarianzmatrix entspricht, und
des Invertierens der aktualisierten Kovarianzmatrix umfasst.

4. Verfahren nach einem der Ansprüche 1 bis 3, wobei der Schritt des Aufbauens des Vektors von Merkmalseingabewerten (34) den Schritt des Berechnens der Merkmalseingabewerte auf der Basis der gemessenen Eingabewerte (30) und Merkmalseingabespezifikationen (35) umfasst.

5. Verfahren nach einem der Ansprüche 1 bis 4, wobei der Schritt des Berechnens der Merkmalseingabewerte (34) eine mathematische Operation umfasst, die aus der Gruppe ausgewählt wird, welche umfasst:
Berechnen von Merkmalseingabewerten auf der Basis von algebraischen Kombinationen von gemessenen Eingabewerten;
Berechnen von Merkmalseingabewerten auf der Basis von Koeffizienten, welche einem Polynom entsprechen, das sich einer Funktion nähert, welche durch gemessene Eingabewerte definiert ist;
Berechnen von Merkmalseingabewerten auf der Basis von Koeffizienten, welche einer Differenzialgleichung entsprechen, die einer Funktion entspricht, welche durch gemessene Eingabewerte definiert ist; und
Berechnen von Merkmalseingabewerten auf der Basis von Koeffizienten, welche einer Frequenzbereichsfunktion entsprechen, die einer Funktion entspricht, welche durch gemessene Eingabewerte definiert ist.

6. Verfahren nach einem der Ansprüche 1 bis 5, wobei der Schritt des Aufbauens des Vektors von berechneten Ausgabewerten (46) den Schritt des Berechnens der Ausgabewerte auf der Basis der Merkmalsausgabewerte (38) und Merkmalsausgabespezifikationen (49) umfasst.

7. Verfahren nach einem der Ansprüche 1 bis 6, wobei der Schritt des Aufbauens des Vektors von berechneten Ausgabewerten den Schritt des Durchführens einer mathematischen Umkehrung einer der mathematischen Operationen, welche mit den gemessenen Eingabewerten durchgeführt wurde, umfasst.

8. Verfahren nach einem der Ansprüche 1 bis 7, wobei der Schritt des Berechnens der Merkmalsausgabewerte die folgenden Schritte umfasst:
Zurechnen von Merkmalsausgabewerten für den gegenwärtigen Zeitversuch auf der Basis der Merkmalseingabewerte für einen oder mehrere vorherige Zeitversuche;
Berechnen von überwachten Merkmalsausgabewerten auf der Basis der Merkmalseingabewerte für den gegenwärtigen Zeitversuch;
Berechnen von Abweichungswerten auf der Basis der zugerechneten Merkmalsausgabewerte und der überwachten Merkmalsausgabewerte; und
Basieren der berechneten Ausgabewerte auf den überwachten Merkmalsausgabewerten.

9. Verfahren nach einem der Ansprüche 1 bis 8, wobei der Schritt des Berechnens der Merkmalsausgabewerte den Schritt des Vorhersagens von Merkmalsausgabewerten für zukünftige Zeitversuche umfasst.

10. Verfahren nach einem der Ansprüche 1 bis 8, wobei das Mehrkern-Matrixfeld (14) umfasst:
ein Matrix-Überwachungsteilfeld (22), welches fähig ist zum:
Zurechnen von Merkmalsausgabewerten für das Matrix-Überwachungsteilfeld auf der Basis der Merkmalseingabewerte für einen oder mehrere vorherige Zeitversuche, der Verbindungsgewichte und der Verbindungsspezifikationen; und
Berechnen der aktualisierten Verbindungsgewichte (40a) für das Matrix-Überwachungsteilfeld auf der Basis der empfangenen Merkmalseingabewerte, der Verbindungsgewichte, der Verbindungsspezifikationen und der Lerngewichte; und
ein Matrix-Voraussageteilfeld (24), welches fähig ist zum:
Berechnen von Merkmalsausgabewerten für das Matrix-Voraussageteilfeld auf der Basis der Merkmalseingabewerte für einen oder mehrere vorherige Zeitversuche, der aktualisierten Verbindungsgewichte und der Verbindungsspezifikationen; und
Berechnen der aktualisierten Verbindungsgewichte (40b) für das Matrix-Voraussageteilfeld auf der Basis der Merkmalseingabewerte für den gegenwärtigen Zeitversuch, der Verbindungsgewichte, der Verbindungsspezifikationen und der Lerngewichte.

11. Verfahren nach einem der Ansprüche 1 bis 9, ferner umfassend den Schritt des Ansprechens auf den Vektor von berechneten Ausgabewerten (46) durch:
Vergleichen jedes Abweichungswertes mit einem zugeordneten Schwellenwert; und
Durchführen, wenn einer der Abweichungswerte seinen zugeordneten Schwellenwert übersteigt, einer oder mehrerer Abweichungsoperationen, die aus der Gruppe ausgewählt werden, welche umfasst:
Anzeigen eines Alarmzustandes, und
Basieren der berechneten Ausgabewerte eher auf dem zugerechneten Merkmalsausgabewert als auf dem überwachten Merkmalsausgabewert für den Merkmalsausgabewert, welcher dem Abweichungswert zugeordnet ist, der seinen verbundenen Schwellenwert übersteigt.

12. Verfahren nach einem der Ansprüche 1 bis 11, ferner umfassend den Schritt des Ansprechens auf den Vektor von berechneten Ausgabewerten durch Durchführen einer oder mehrerer Steuerungsoperationen, die aus der Gruppe ausgewählt werden, welche umfasst:
Anzeigen einer Darstellung der berechneten Ausgabewerte auf einer Anzeigevorrichtung, und
Auslösen eines gesteuerten Parameters, um einen Zustand auszugleichen, welcher durch die berechneten Ausgabewerte angezeigt wird.

13. Verfahren nach einem der Ansprüche 1 bis 12, welches, wenn Verfeinerungsoperationen angezeigt werden, ferner die folgenden Schritte umfasst:
Neuberechnen der Lerngewichte auf der Basis der gemessenen Eingabewerte und der berechneten Ausgabewerte für eine Mehrzahl von Zeitversuchen; und
Neuberechnen der Verbindungsspezifikationen auf der Basis der gemessenen Eingabewerte und der berechneten Ausgabewerte für eine Mehrzahl von Zeitversuchen.

14. Verfahren nach einem der Ansprüche 1 bis 13, welches, wenn Verfeinerungsoperationen angezeigt werden, ferner die folgenden Schritte umfassend:
Löschen von unwirksamen Merkmalseingabe- oder -ausgabewerten;
Kombinieren von redundanten Merkmalseingabe- oder -ausgabewerten;
Bestimmen von neuen Merkmalseingabe- oder -ausgabewerten;
Neuberechnen der Merkmalseingabespezifikationen auf der Basis der gemessenen Eingabewerte und der berechneten Ausgabewerte für eine Mehrzahl von Zeitversuchen;
Neuberechnen der Merkmalsausgabespezifikationen auf der Basis der gemessenen Eingabewerte und der berechneten Ausgabewerte für eine Mehrzahl von Zeitversuchen; und
Neuzuordnen von Funktionalität unter den Kernen.

15. Verfahren nach einem der Ansprüche 1 bis 14, wobei der Mehrkernprozessor (14) umfasst:
ein Matrixfeld (408) von räumlich zugeordneten Kernen (400a-n), welche einem räumlich angrenzenden Feld entsprechen, von dem Eingabewerte gemessen werden und für das Ausgabewerte vorhergesagt werden; und
jeder Kern konfiguriert ist, um einen der berechneten Ausgabewerte auf der Basis eines Satzes von benachbarten gemessenen Eingabewerten zu berechnen.

16. Verfahren nach Anspruch 15, wobei:
jeder Kern des Mehrkernprozessors (14) einem Bildpunkt in einem optischen Bild entspricht;
jeder gemessene Eingabewert einer gemessenen Intensität eines der Bildpunkte des optischen Bildes e:ntspricht; und
jeder berechnete Ausgabewert einer berechneten Intensität eines der Bildpunkte des optischen Bildes entspricht.

17. Verfahren nach einem der Ansprüche 1 bis 14, wobei der Mehrkernprozessor (14) umfasst:
ein Matrixfeld (500) von zeitlich zugeordneten Kernen (504a-n), welche einem zeitbasierten Index entsprechen, von dem Eingabewerte gemessen werden und für den Ausgabewerte vorhergesagt werden; und
jeder Kern konfiguriert ist, um einen der sich gegenseitig ausschließenden Werte der zeitbasierten Indexwerte auf der Basis der gemessenen Eingabewerte vorherzusagen.

18. Verfahren nach Anspruch 17, wobei:
jeder Kern des Mehrkernprozessors (14) einer sich gegenseitig ausschließenden zeitspezifischen Preisvoraussage für einen Rohstoffpreisindex entspricht; und
jeder Kern konfiguriert ist, um seine entsprechende sich gegenseitig ausschließende zeitspezifische Preisvoraussage auf der Basis der gemessenen Eingabewerte vorherzusagen.

19. Verfahren nach Anspruch 18, wobei die gemessenen Eingabewerte umfassen:
den Rohstoffpreisindex; und
die Preisindizes für Währungen und andere Handelsgüter.

20. Verfahren nach einem der Ansprüche 1 bis 14, wobei der Mehrkernprozessor umfasst:
eine Mehrzahl (600) von Kerngruppen (602a-n), wobei jede eine Mehrzahl von zeitlich zugeordneten Kernen umfasst, welche einem zeitbasierten Index entsprechen, von dem Eingabewerte gemessen werden und für den Ausgabewerte vorhergesagt werden;
jede Kerngruppe eine Mehrzahl von einzelnen Kernen umfasst, wobei jeder konfiguriert ist, um eine Komponente eines sich gegenseitig ausschließenden zeitbasierten Indexwertes auf der Basis der gemessenen Eingabewerte vorherzusagen;
die Mehrzahl von Gruppen zeitlich zugeordneter Kerne ein Matrixfeld von räumlich zugeordneten Kerngruppen definiert;
jede Kerngruppe konfiguriert ist, um eine Komponente des zeitbasierten Indexes zu berechnen.

21. Verfahren nach Anspruch 20, wobei:
der zeitbasierte Index einen Strombedarfsindex umfasst;
jede Kerngruppe einer Mehrzahl von Stromlieferstellen entspricht; und
die gemessenen Eingabewerte Strombedarfs- und Wetterdaten umfassen.

22. Verfahren nach einem der Ansprüche 1 bis 21, wobei der Schritt des Bereitstellens des Vektors von Merkmalseingabewerten für einen Mehrkernprozessor ferner die folgenden Schritte umfasst:
Bereitstellen des Vektors von Merkmalseingabewerten für ein Matrix-Überwachungsteilfeld (22) und ein Matrix-Voraussageteilfeld (24);
Zurechnen von Merkmalsausgabewerten für das Matrix-Überwachungsteilfeld auf der Basis der Merkmalseingabewerte für einen oder mehrere vorherige Zeitversuche, der Verbindungsgewichte und der Verbindungsspezifikationen;
Berechnen der aktualisierten Verbindungsgewichte für das Matrix-Voraussageteilfeld auf der Basis der empfangenen Merkmalseingabewerte für den gegenwärtigen Zeitversuch, der Verbindungsgewichte, der Verbindungsspezifikationen, der Lerngewichte und der zugerechneten Merkmalsausgabewerte;
Berechnen von Merkmalsausgabewerten für das Matrix-Voraussageteilfeld auf der Basis der Merkmalseingabewerte für einen oder mehrere vorherige Zeitversuche, der aktualisierten Verbindungsgewichte und der Verbindungsspezifikationen; und
Berechnen der aktualisierten Verbindungsgewichte für das Matrix-Überwachungsteilfeld auf der Basis der empfangenen Merkmalseingabewerte, der Verbindungsgewichte, der Verbindungsspezifikationen und der Lerngewichte.

23. Verfahren nach Anspruch 22, wobei:
die Verbindungsgewichte für das Überwachungs- Matrixteilfeld die Elemente einer inversen Kovarianzmatrix für das Matrix-Überwachungsteilfeld umfassen, und
der Schritt des Berechnens der aktualisierten Verbindungsgewichte für das Matrix-Überwachungsteilfeld den Schritt des Aktualisierens der inversen Kovarianzmatrix für das Matrix-Überwachungsteilfeld umfasst;
die Verbindungsgewichte für das Matrix-Voraussageteilfeld die Elemente einer inversen Kovarianzmatrix für das Matrix-Voraussageteilfeld umfassen; und
der Schritt des Berechnens der aktualisierten Verbindungsgewichte für das Matrix-Voraussageteilfeld den Schritt des Aktualisierens der inversen Kovarianzmatrix für das Matrix-Voraussageteilfeld umfasst.

24. Verfahren nach Anspruch 22, wobei:
die Verbindungsgewichte für das Matrix-Überwachungsteilfeld die Elemente einer inversen Kovarianzmatrix für das Matrix-Überwachungsteilfeld umfassen;
der Schritt des Berechnens von aktualisierten Verbindungsgewichten für das Matrix-Überwachungsteilfeld die folgenden Schritte umfasst:
Aktualisieren einer Kovarianzmatrix für das Matrix-Überwachungsteilfeld, welche der inversen Kovarianzmatrix für das Matrix-Überwachungsteilfeld entspricht; und
Invertieren der aktualisierten Kovarianzmatrix für das Matrix-Überwachungsteilfeld;
die Verbindungsgewichte für das Matrix-Voraussageteilfeld die Elemente einer inversen Kovarianzmatrix für das Matrix-Voraussageteilfeld umfassen; und
der Schritt des Berechnens der aktualisierten Verbindungsgewichte für das Matrix-Voraussageteilfeld die folgenden Schritte umfasst:
Aktualisieren einer Kovarianzmatrix für das Mat:rix-Voraussageteilfeld, welche der inversen Kovarianzmatrix für das Matrix-Voraussageteilfeldes entspricht; und
Invertieren der aktualisierten Kovarianzmatrix für das Matrix-Voraussageteilfeld.

25. Rechnersystem, umfassend einen Eingabeprozessor (12), welcher zum Empfangen einer Wiederholung von gemessenen Eingabewerten (30) für einen gegenwärtigen und zukünftigen Zeitversuch und Aufbauen eines Vektors von Merkmalseingabewerten (34) auf der Basis der gemessenen Eingabewerte konfiguriert ist, **gekennzeichnet durch**:
ein Mehrkern-Matrixfeld (14) eines rekursiven neuronalen Netzwerks, welches mit dem Eingabeprozessor gekoppelt ist und umfasst:
ein Matrix-Überwachungsteilfeld (22), welches fähig ist zum:
Zurechnen von Merkmalsausgabewerten für das Matrix-Überwachungsteilfeld auf der Basis der Merkmalseingabewerte für einen oder mehrere vorherige Zeitversuche, der Verbindungsgewichte und der Verbindungsspezifikationen; und
Berechnen von aktualisierten Verbindungsgewichten für das Matrix-Überwachungsteilfeld auf der Basis der empfangenen Merkmalseingabewerte, der Verbindungsgewichte, der Verbindungsspezifikationen und der Lerngewichte; und
ein Matrix-Voraussageteilfeld (24), welches fähig ist zum:
Berechnen von Merkmalsausgabewerten für das Matrix-Voraussageteilfeld auf der Basis der Merkmalseingabewerte für einen oder mehrere vorherige Zeitversuche, der aktualisierten Verbindungsgewichte, welche **durch** das Matrix-Überwachungsteilfeld berechnet wurden, und der Verbindungsspezifikationen, und
Berechnen von aktualisierten Verbindungsgewichten für das Matrix-Voraussageteilfeld auf der Basis der empfangenen Merkmalseingabewerte für den gegenwärtigen Zeitversuch, der Verbindungsgewichte, der Verbindungsspezifikationen, der Lerngewichte und der zugerechneten Merkmalsausgabewerte, wobei das System ferner umfasst:
Mittel (26a-b) zum Speichern der aktualisierten Verbindungsgewichte;
Mittel (12) zum Bereitstellen von Zugriff auf die berechneten Merkmalsausgabewerte;
Mittel (44) zum Aufbauen eines Vektors von berechneten Ausgabewerten auf der Basis der Merkmalsausgabewerte, welche **durch** jeden Kern berechnet werden;
Mittel (18) zum Ansprechen auf den Vektor von berechneten Ausgabewerten;
Mittel (16) zum Feststellen, ob Verfeinerungsoperationen angezeigt werden; und
Mittel (16) zum Durchführen einer oder mehrerer Verfeinerungsoperationen, die aus der Gruppe ausgewählt werden, welche umfasst:
Löschen von unwirksamen Merkmalseingabe- oder -ausgabewerten;
Kombinieren von redundanten Merkmalseingabe- oder - ausgabewerten;
Bestimmen von neuen Merkmalseingabe- oder -ausgabewerten;
Neuberechnen der Merkmalseingabespezifikationen auf der Basis der gemessenen Eingabewerte und der berechneten Ausgabewerte für eine Mehrzahl von Zeitversuchen;
Neuberechnen der Lerngewichte auf der Basis der gemessenen Eingabewerte und der berechneten Ausgabewerte für eine Mehrzahl von Zeitversuchen;
Neuberechnen der Verbindungsspezifikationen auf der Basis der gemessenen Eingabewerte und der berechneten Ausgabewerte für eine Mehrzahl von Zeitversuchen;
Neuberechnen der Merkmalsausgabespezifikationen auf der Basis der gemessenen Eingabewerte und der berechneten Ausgabewerte für eine Mehrzahl von Zeitversuchen; und
Neuzuordnen von Funktionalität unter den Kernen.

26. Rechnersystem nach Anspruch 25, wobei jeder Kern des Mehrkern-Matrixfeldes umfasst:
Mittel (22, 24) zum Empfangen eines oder mehrerer der Merkmalseingabewerte;
Mittel (22, 24) zum Abrufen von Verbindungsspezifikationen (42), welche mathematische Beziehungen zum Berechnen eines oder mehrerer Merkmalsausgabewerte auf der Basis der empfangenen Merkmalseingabewerte definieren;
Mittel (22, 24) zum Abrufen eines Satzes von Verbindungsgewichten (40a, b), welche Regressionskoeffizienten unter den empfangenen Merkmalseingabewerten und den berechneten Merkmalsausgabewerten darstellen;
Mittel (22, 24) zum Abrufen eines Satzes von Lerngewichten (55), welche mathematische Beziehungen zum Aktualisieren der Verbindungsgewichte auf der Basis der empfangenen Merkmalseingabewerte definieren;
Mittel (22, 24) zum Berechnen von Merkmalsausgabewerten (38) auf der Basis der empfangenen Merkmalseingabewerte, der Verbindungsgewichte und der Verbindungsspezifikationen; und
Mittel (22, 24) zum Berechnen von aktualisierten Verbindungsgewichten auf der Basis der empfangenen Merkmalseingabewerte, der Verbindungsgewichte, der Verbindungsspezifikationen und der Lerngewichte.

27. Rechnersystem nach Anspruch 25 oder 26, wobei:
die Verbindungsgewichte (40a-b) die Elemente einer inversen Kovarianzmatrix umfassen; und
der Schritt des Berechnens der aktualisierten Verbindungsgewichte den Schritt des Aktualisierens der inversen Kovarianzmatrix umfasst.

28. Rechnersystem nach Anspruch 25 oder 26, wobei
die Verbindungsgewichte (40a-b) die Elemente einer inversen Kovarianzmatrix umfassen; und
das Mittel zum Berechnen von aktualisierten Verbindungsgewichten Mittel zum Aktualisieren einer Kovarianzmatrix, welche der inversen Kovarianzmatrix entspricht, und Invertieren der aktualisierten Kovarianzmatrix umfasst.

29. Rechnersystem nach einem der Ansprüche 25 bis 28, wobei das Mittel zum Berechnen der Merkmalsausgabewerte umfasst:
Mittel (22) zum Zurechnen von Merkmalsausgabewerten des gegenwärtigen Zeitversuchs auf der Basis der Merkmalseingabewerte für einen oder mehrere vorherige Zeitversuche; und
Mittel (24) zum Vorhersagen von Merkmalsausgabewerten für zukünftige Zeitversuche.

30. Rechnersystem nach einem der Ansprüche 25 bis 29, wobei das Mittel zum Berechnen der Merkmalsausgabewerte umfasst:
Mittel (22) zum Zurechnen von Merkmalsausgabewerten für den gegenwärtigen Zeitversuch auf der Basis der Merkmalseingabewerte für einen oder mehrere vorherige Zeitversuche;
Mittel (22) zum Berechnen von überwachenden Merkmalsausgabewerten auf der Basis der Merkmalseingabewerte für den gegenwärtigen Zeitversuch;
Mittel (22) zum Berechnen von Abweichungswerten auf der Basis der zugerechneten Merkmalsausgabewerte von und der überwachten Merkmalsausgabewerte; und ,
Mittel (24) zum Basieren der berechneten Ausgabewerte auf den überwachten Merkmalsausgabewerten.

31. Rechnersystem nach einem der Ansprüche 25 bis 30, wobei das Mittel (18) zum Ansprechen auf den Vektor von berechneten Ausgabewerten umfasst:
Mittel zum Vergleichen jedes Abweichungswertes mit einem verbundenen Schwellenwert; und
Mittel zum Durchführen, wenn einer der Abweichungswerte seinen zugeordneten Schwellenwert überschreitet, einer oder mehrerer Abweichungsoperationen, die aus der Gruppe ausgewählt werden, welche umfasst:
Anzeigen eines Alarmzustandes, und
Basieren der berechneten Ausgabewerte eher auf dem zugerechneten Merkmalsausgabewert als auf dem überwachten Merkmalsausgabewert für den Merkmalsausgabewert, welcher dem Abweichungswert zugeordnet ist, der seinen zugeordneten Schwellenwert übersteigt.

32. Rechnersystem nach einem der Ansprüche 25 bis 31, wobei das Mittel (18) zum Ansprechen auf den Vektor von berechneten Ausgabewerten Mittel zum Durchführen einer oder mehrerer Steuerungsoperationen umfasst, die aus der Gruppe ausgewählt werden, welche umfasst:
Anzeigen einer Darstellung der berechneten Ausgabewerte auf einer Anzeigevorrichtung, und
Auslösen eins gesteuerten Parameters, um einen Zustand auszugleichen, welcher durch die berechneten Ausgabewerten angezeigt wird.

33. Rechnersystem nach einem der Ansprüche 25 bis 32, ferner umfassend:
Mittel (54) zum Neuberechnen der Lerngewichte auf der Basis der gemessenen Eingabewerten und der berechneten Ausgabewerte für eine Mehrzahl von Zeitversuchen; und
Mittel (52) zum Neuberechnen der Merkmalswertspezifikationen auf der Basis der gemessenen Eingabewerte und der berechneten Ausgabewerte für eine Mehrzahl von Zeitversuchen.

34. Rechnersystem nach einem der Ansprüche 25 bis 33, ferner umfassend:
Mittel (50) zum Löschen von unwirksamen Merkmalseingabe- oder ausgabewerten;
Mittel (50) zum Kombinieren von redundanten Merkmalseingabe- oder ausgabewerten;
Mittel (50) zum Bestimmen von neuen Merkmalseingabeoder ausgabewerten;
Mittel (50) zum Neuberechnen der Verbindungsspezifikationen auf der Basis der gemessenen Eingabewerte und der berechneten Ausgabewerte für eine Mehrzahl von Zeitversuchen;
Mittel (50) zum Neuzuordnen von Funktionalität unter den Kernen.

35. Rechnersystem nach einem der Ansprüche 25 bis 34, wobei der Mehrkernprozessor umfasst:
ein Matrixfeld (408) von räumlich zugeordneten Kernen (400a-n), welche einem räumlich angrenzenden Feld entsprechen, von dem Eingabewerte gemessen werden und für das Ausgabewerte vorhergesagt werden; und
jeder Kern konfiguriert ist, um einen der berechneten Ausgabewerte auf der Basis eines Satzes von benachbarten gemessenen Eingabewerten zu berechnen.

36. Rechnersystem nach Anspruch 35, wobei:
jeder Kern des Mehrkernprozessors einem Bildpunkt in einem optischen Bild entspricht;
jeder gemessene Eingabewert einer gemessenen Intensität eines der Bildpunkte des optischen Bildes entspricht; und
jeder berechnete Ausgabewert einer berechneten Intensität eines der Bildpunkte des optischen Bildes entspricht.

37. Rechnersystem nach einem der Ansprüche 25 bis 34, wobei der Mehrkernprozessor umfasst:
ein Matrixfeld (500) von zeitlich zugeordneten Kernen (504a-n), welche einem zeitbasierten Index entsprechen, von dem Eingabewerte gemessen werden und für den Ausgabewerte vorhergesagt werden; und
jeder Kern konfiguriert ist, um einen sich gegenseitig ausschließenden Wert der zeitbasierten Indexwerte auf der Basis der gemessenen Eingabewerte vorherzusagen.

38. Rechnersystem nach Anspruch 37, wobei:
jeder Kern des Mehrkernprozessors einer sich gegenseitig ausschließenden zeitspezifischen Preisvoraussage für einen Rohstoffpreisindex entspricht; und
jeder Kern konfiguriert ist, um seine entsprechende sich gegenseitig ausschließende zeitspezifische Preisvoraussage auf der Basis der gemessenen Eingabewerte vorherzusagen.

39. Rechnersystem nach Anspruch 38, wobei die gemessenen Eingabewerte umfassen:
den Rohstoffpreisindex; und
die Preisindizes für Währungen und andere Handelsgüter.

40. Rechnersystem nach einem der Ansprüche 25 bis 34, wobei der Mehrkernprozessor folgendes umfasst:
eine Mehrzahl (600) von Kerngruppen (602a-n), wobei jede eine Mehrzahl von zeitlich zugeordneten Kernen umfasst, welche einem zeitbasierten Index entsprechen, von dem Eingabewerte gemessen werden und für den Ausgabewerte vorhergesagt werden;
jede Kerngruppe eine Mehrzahl von einzelnen Kernen umfasst, wobei jeder konfiguriert ist, um eine Komponente eines sich gegenseitig ausschließenden zeitbasierten Indexwertes auf der Basis der gemessenen Eingabewerte vorherzusagen;
die Mehrzahl von Gruppen von zeitlich zugeordneten Kernen ein Matrixfeld von räumlich zugeordneten Kerngruppen definiert;
jede Kerngruppe konfiguriert ist, um eine Komponente
zeitbasierten Indexes zu berechnen.

41. Rechnersystem nach Anspruch 40, wobei:
der zeitbasierte Index einen Strombedarfsindex umfasst;
jede Kerngruppe einer Mehrzahl von Stromlieferstellen entspricht; und
die gemessenen Eingabewerte Strombedarfs- und Wetterdaten umfassen.

42. Vorrichtung, welche geeignet ist, um das Verfahren nach einem der Ansprüche 1 bis 24 durchzuführen.

43. Rechnerspeichermedium, welches durch Rechner ausführbare Befehle zum Durchführen des Verfahrens nach einem der Ansprüche 1 bis 24 enthält.

## Revendications

1. Procédé de réponse à des valeurs calculées de sortie (46) qui dépendent de valeurs mesurées d'entrée (30) reçues pendant un essai au moment actuel et pendant un ou plusieurs essais à des moments historiques, comprenant des étapes de réception d'une ou plusieurs itérations des valeurs mesurées d'entrée des essais aux moments actuel et futurs et d'assemblage d'un vecteur des valeurs des caractéristiques d'entrée (34) d'après les valeurs mesurées d'entrée, **caractérisé par** :
(a) la transmission du vecteur des valeurs des caractéristiques d'entrée (34) à un processeur (14) à plusieurs noyaux d'un réseau récursif de neurones, chaque noyau du processeur étant destiné à :
recevoir une plusieurs des valeurs des caractéristiques d'entrée (34),
récupérer des spécifications de connexion (42) qui définissent des relations mathématiques pour le calcul d'une ou plusieurs valeurs des caractéristiques de sortie (38) d'après les valeurs reçues des caractéristiques d'entrée,
récupérer un ensemble de poids originaux de connexion (40a-b) représentant des coefficients de régression parmi les valeurs reçues des caractéristiques d'entrée et les valeurs calculées des caractéristiques de sortie,
récupérer un ensemble de poids d'apprentissage (55) définissant des relations mathématiques de remise à jour des poids de connexion d'après les valeurs reçues des caractéristiques d'entrée,
calculer les valeurs des caractéristiques de sortie (38) d'après les valeurs reçues des caractéristiques d'entrée (34), les poids de connexion (40a-b) et les spécifications de connexion (42),
calculer des poids remis à jour de connexion (40a-b) d'après les valeurs reçues des caractéristiques d'entrée (34), les poids de connexion (40a-b), les spécifications de connexion (42) et les poids d'apprentissage (55), et
mémoriser les poids remis à jour de connexion (40a-b) comme poids de connexion pour un essai à un moment ultérieur,
(b) l'assemblage d'un vecteur des valeurs calculées de sortie (46) en fonction des valeurs des caractéristiques de sortie (38) calculées par chaque noyau,
(c) la détermination du fait que des opérations d'affinement sont indiquées,
(d) si des opérations d'affinement ne sont pas indiquées, la répétition des étapes (a) à (c) pour l'essai du moment suivant, et
(e) si des opérations d'affinement sont indiquées, l'exécution d'une ou plusieurs opérations d'affinement choisies dans le groupe qui comprend :
le recalcul des poids d'apprentissage d'après les valeurs mesurées d'entrée et les valeurs calculées de sortie pour des essais à plusieurs moments,
le recalcul des spécifications de connexion d'après les valeurs mesurées d'entrée et les valeurs calculées de sortie pour des essais à plusieurs moments,
la suppression des valeurs inefficaces des caractéristiques d'entrée ou de sortie,
la combinaison de valeurs redondantes des caractéristiques d'entrée ou de sortie,
la spécification de nouvelles valeurs des caractéristiques d'entrée ou de sortie,
le recalcul des spécifications des caractéristiques d'entrée d'après les valeurs mesurées d'entrée et les valeurs calculées de sortie pour des essais à plusieurs moments,
le recalcul des spécifications des caractéristiques de sortie d'après les valeurs mesurées d'entrée et les valeurs calculées de sortie pour des essais à plusieurs moments, et
la réaffectation des fonctionnalités parmi les noyaux.

2. Procédé selon la revendication 1, dans lequel :
les poids de connexion (40a-b) comprennent les éléments d'une matrice inverse de covariances, et
l'étape de calcul des poids remis à jour de connexion comprend l'étape de remise à jour de la matrice inverse de covariances.

3. Procédé selon la revendication 1, dans lequel :
les poids de connexion (40a-b) comprennent les éléments d'une matrice inverse de covariances, et
l'étape de calcul des poids remis à jour de connexion comprend les étapes suivantes :
la remise à jour d'une matrice de covariances qui correspond à la matrice inverse de covariances, et
l'inversion de la matrice remise à jour de covariances.

4. Procédé selon l'une quelconque des revendications 1 à 3, dans lequel l'étape d'assemblage du vecteur des valeurs des caractéristiques d'entrée (34) comprend l'étape de calcul des valeurs des caractéristiques d'entrée d'après les valeurs mesurées d'entrée (30) et les spécifications des caractéristiques d'entrée (35).

5. Procédé selon l'une quelconque des revendications 1 à 4, dans lequel l'étape de calcul des valeurs des caractéristiques d'entrée (34) comprend une opération mathématique choisie dans le groupe qui comprend :
le calcul de premières valeurs des caractéristiques d'entrée d'après des combinaisons algébriques des valeurs mesurées d'entrée,
le calcul des valeurs des caractéristiques d'entrée d'après des coefficients correspondant à un polynôme qui représente approximativement une fonction définie par les valeurs mesurées d'entrée,
le calcul des valeurs des caractéristiques d'entrée d'après des coefficients correspondant à une équation différentielle correspondant elle-même à une fonction définis par les valeurs mesurées d'entrée, et
le calcul des valeurs des caractéristiques d'entrée d'après des coefficients correspondant à une fonction dans le domaine de fréquence qui correspond elle-même à une fonction définie par les valeurs mesurées d'entrée.

6. Procédé selon l'une quelconque des revendications 1 à 5, dans lequel l'étape d'assemblage du vecteur des valeurs calculées de sortie (46) comprend l'étape de calcul des valeurs de sortie d'après les valeurs des caractéristiques de sortie (38) et les spécifications des caractéristiques de sortie (49).

7. Procédé selon l'une quelconque des revendications 1 à 6, dans lequel l'étape d'assemblage du vecteur des valeurs calculées de sortie comprend l'étape d'exécution d'une inversion mathématique de l'une des opérerions mathématiques exécutées sur les valeurs mesurées d'entrée.

8. Procédé selon l'une quelconque des revendications 1 à 7, dans lequel l'étape de calcul des valeurs des caractéristiques de sortie comprend les étapes suivantes :
l'imputation de valeurs des caractéristiques de sortie pour l'essai au moment actuel d'après les valeurs des caractéristiques d'entrée pour les essais d'un ou plusieurs temps historiques,
le calcul des valeurs contrôlées des caractéristiques de sortie d'après les valeurs des caractéristiques d'entrée pour l'essai au moment actuel,
le calcul de valeurs de déviation d'après les valeurs imputées des caractéristiques de sortie et les valeurs contrôlées des caractéristiques de sortie, et
l'établissement des valeurs calculées de sortie sur les valeurs contrôlées des caractéristiques de sortie.

9. Procédé selon l'une quelconque des revendications 1 à 8, dans lequel l'étape de calcul des valeurs des caractéristiques de sortie comprend l'étape de prédiction des valeurs des caractéristiques de sortie pour des essais à des temps futurs.

10. Procédé selon l'une quelconque des revendications 1 à 8, dans lequel l'arrangement à plusieurs noyaux (14) comprend :
un sous-arrangement de contrôle (22) destiné à :
imputer des valeurs des caractéristiques de sortie pour le sous-arrangement de contrôle d'après les valeurs des caractéristiques d'entrée pour des essais à un ou plusieurs temps historiques, les poids de connexion et les spécifications de connexion, et
calculer des poids remis à jour de connexion (40a) pour le sous-arrangement de contrôle d'après les valeurs reçues des caractéristiques d'entrée, les poids de connexion, les spécifications de connexion et les poids d'apprentissage, et
un sous-arrangement de prévision (24) destiné à :
calculer les valeurs des caractéristiques de sortie pour le sous-arrangement de prévision d'après les valeurs des caractéristiques d'entrée pour des essais à un ou plusieurs temps historiques, les poids remis à jour de connexion et les spécifications de connexion, et
calculer des poids remis à jour de connexion (40b) pour le sous-arrangement de prévision d'après les valeurs reçues des caractéristiques d'entrée pour l'essai du moment actuel, les poids de connexion, les spécifications de connexion, les poids d'apprentissage et les valeurs imputées des caractéristiques de sortie.

11. Procédé selon l'une quelconque des revendications 1 à 9, comprenant en outre l'étape de réponse au vecteur des valeurs calculées de sortie (46) par :
comparaison de chaque valeur de déviation à une valeur associée de seuil, et
lorsque l'une des valeurs de déviation dépasse sa valeur associée de seuil, l'exécution d'une ou plusieurs opérations de déviation choisies dans le groupe qui comprend :
l'indication d'une condition d'alarme, et
l'établissement des valeurs calculées de sortie d'après la valeur imputée des caractéristiques de sortie plutôt que de la valeur contrôlée des caractéristiques de sortie pour la valeur de caractéristiques de sortie associée à la valeur de déviation qui dépasse sa valeur associée de seuil.

12. Procédé selon l'une quelconque des revendications 1 à 11, comprenant en outre l'étape de réponse au vecteur des valeurs calculées de sortie par exécution d'une ou plusieurs opérations de commande sélectionnées dans le groupe qui comprend :
l'affichage d'une représentation des valeurs calculées de sortie sur un dispositif d'affichage, et
la commande d'un paramètre commandé pour la compensation d'une condition indiquée par les valeurs calculées de sortie.

13. Procédé selon l'une quelconque des revendications 1 à 12, qui, lorsque des opérations d'affinement sont indiquées, comprend en outre les étapes suivantes :
le recalcul des poids d'apprentissage d'après les valeurs mesurées d'entrée et les valeurs calculées de sortie pour des essais à plusieurs moments, et
le recalcul des spécifications de connexion d'après les valeurs mesurées d'entrée et les valeurs calculées de sortie pour les essais à plusieurs moments.

14. Procédé selon l'une quelconque des revendications 1 à 13, qui, lorsque des opérations d'affinement sont indiquées, comprend en outre les étapes suivantes :
la suppression des valeurs inefficaces des caractéristiques d'entrée ou de sortie,
la combinaison des valeurs redondantes des caractéristiques d'entrée ou de sortie,
la spécification de nouvelles valeurs des caractéristiques d'entrée ou de sortie,
le recalcul des spécifications des caractéristiques d'entrée d'après les valeurs mesurées d'entrée et les valeurs calculées de sortie pour des essais à plusieurs moments,
le recalcul des spécifications des caractéristiques de sortie d'après les valeurs mesurées d'entrée et les valeurs calculées de sortie pour des essais à plusieurs moments, et
la réaffectation des fonctionnalités parmi les noyaux.

15. Procédé selon l'une quelconque des revendications 1 à 14, dans lequel le processeur à plusieurs noyaux (14) comprend :
un arrangement (408) de noyaux (400a-n) dédiés spatialement qui correspondent à un champ contigu spatialement à partir duquel les valeurs d'entrée sont mesurées et pour lequel les valeurs de sortie sont prédites, et
chaque noyau étant configuré afin qu'il calcule l'une des valeurs calculées de sortie d'après un ensemble de valeurs mesurées adjacentes d'entrée.

16. Procédé selon la revendication 15, dans lequel :
chaque noyau du processeur à plusieurs noyaux (14) correspond à un élément d'image dans une image visible,
chaque valeur mesurée d'entrée correspond à une intensité mesurée de l'un des éléments de l'image visible, et
chaque valeur calculée de sortie correspond à une intensité calculée de l'un des éléments de l'image visible.

17. Procédé selon l'une quelconque des revendications 1 à 14, dans lequel le processeur à plusieurs noyaux (14) comporte :
un arrangement (500) de noyaux dédiés temporellement (504a-n) qui correspondent à un indice à base temporelle à partir duquel les valeurs d'entrée sont mesurées et pour lequel les valeurs de sortie sont prédites,
chaque noyau ayant une configuration permettent la prédiction d'une valeur mutuellement exclusive parmi les valeurs d'index à base temporelle d'après les valeurs mesurées d'entrée.

18. Procédé selon la revendication 17, dans lequel :
chaque noyau du processeur à plusieurs noyaux correspond à une prévision de prix spécifique dans le temps et exclusive mutuellement pour un indice de prix de marchandise, et
chaque noyau ayant une configuration destinée à la prédiction de sa prévision correspondante de prix spécifique du temps et mutuellement exclusive d'après les valeurs mesurées d'entrée.

19. Procédé selon la revendication 18, dans lequel les valeurs mesurées d'entrée comprennent :
l'indice des prix de marchandises, et
les indices de prix de devises et autres marchandises.

20. Procédé selon l'une quelconque des revendications 1 à 14, dans lequel le processeur à plusieurs noyaux comprend :
plusieurs (600) groupes de noyaux (602a-n) comprenant chacun plusieurs noyaux dédiés temporellement correspondant à un indice à base temporelle à partir duquel des valeurs d'entrée sont mesurées et pour lequel des valeurs de sortie sont prédites,
chaque groupe de noyaux comprenant plusieurs noyaux individuels ayant chacun une configuration permettant la prédiction d'une composante d'une valeur d'indice à base temporelle mutuellement exclusive d'après les valeurs mesurées d'entrée,
les groupes de noyaux dédiés temporellement formant un arrangement de groupes de noyaux dédiés spatialement,
chaque groupe de noyaux ayant une configuration permettant le calcul d'une composante de l'indice à base temporelle.

21. Procédé selon la revendication 20, dans lequel :
l'indice à base temporelle comprend un indice de demande d'électricité,
chaque groupe de noyaux correspond à plusieurs points de distribution d'électricité, et
les valeurs mesurées d'entrée comprennent la demande d'électricité et les données météorologiques.

22. Procédé selon l'une quelconque des revendications 1 à 21, dans lequel l'étape de transmission du vecteur des valeurs des caractéristiques d'entrée à un processeur à plusieurs noyaux comporte en outre les étapes suivantes :
la transmission du vecteur des valeurs des caractéristiques d'entrée à un sous-arrangement de contrôle (22) et un sous-arrangement de prévision (24),
l'imputation de valeurs des caractéristiques de sortie pour le sous-arrangement de contrôle d'après les valeurs des caractéristiques d'entrée pour des essais à un ou plusieurs temps historiques, les poids de connexion et les spécifications de connexion,
le calcul des poids remis à jour de connexion pour le sous-arrangement de prévision d'après les valeurs reçues des caractéristiques d'entrée pour l'essai du moment actuel, les poids de connexion, les spécifications de connexion, les poids d'apprentissage et les valeurs imputées des caractéristiques de sortie,
le calcul des valeurs des caractéristiques de sortie pour le sous-arrangement de prévision d'après les valeurs des caractéristiques d'entrée pour des essais à un ou plusieurs temps historiques, les poids remis à jour de connexion et les spécifications de connexion, et
le calcul des poids remis à jour de connexion pour le sous-arrangement de contrôle d'après les valeurs reçues des caractéristiques d'entrée, les poids de connexion, les spécifications de connexion et les poids d'apprentissage.

23. Procédé selon la revendication 22, dans lequel :
les poids de connexion du sous-arrangement de contrôle comportent les éléments d'une matrice inverse de covariances pour le sous-arrangement de contrôle, et
l'étape de calcul des poids remis à jour de connexion pour le sous-arrangement de contrôle comprend l'étape de remise à jour de la matrice inverse de covariances pour le sous-arrangement de contrôle,
les poids de connexion pour le sous-arrangement de prévision comprennent les éléments d'une matrice inverse de covariances pour le sous-arrangement de prévision, et
l'étape de calcul des poids remis à jour de connexion pour le sous-arrangement de prévision comporte l'étape de remise à jour de la matrice inverse de covariances pour le sous-arrangement de prévision.

24. Procédé selon la revendication 22, dans lequel :
les poids de connexion pour le sous-arrangement de contrôle comprennent les éléments d'une matrice inverse de covariances pour le sous-arrangement de contrôle,
l'étape de calcul des poids remis à jour de connexion pour le sous-arrangement de contrôle comporte les étapes suivantes :
la remise à jour d'une matrice de covariances pour le sous-arrangement de contrôle correspondant à la matrice inverse de covariances pour le sous-arrangement de contrôle, et
l'inversion de la matrice remise à jour de covariances pour le sous-arrangement de contrôle,
les poids de connexion du sous-arrangement de prévision comprennent les éléments d'une matrice inverse de covariances pour le sous-arrangement de prévision, et
l'étape de calcul des poids remis à jour de connexion pour le sous-arrangement de prévision comprend les étapes suivantes :
la remise à jour d'une matrice de covariances pour le sous-arrangement de prévision, correspondant à la matrice inverse de covariances pour le sous-arrangement de prévision, et
l'inversion de la matrice remise à jour de covariances pour le sous-arrangement de prévision.

25. Système d'ordinateur comprenant un processeur d'entrée (12) ayant une configuration destinée à la réception d'une itération de valeurs mesurées d'entrée (30) pour un essai à un moment actuel et à un moment futur, et à assembler un vecteur de valeur des caractéristiques d'entrée (34) d'après les valeurs mesurées d'entrée, **caractérisé par** :
un arrangement (14) à plusieurs noyaux de réseau de neurones récursif couplé au processeur d'entrée et comprenant :
un sous-arrangement de contrôle (22) destiné à :
imputer des valeurs des caractéristiques de sortie pour le sous-arrangement de contrôle d'après les valeurs des caractéristiques d'entrée pour des essais à un ou plusieurs temps historiques, les poids de connexion et les spécifications de connexion, et
calculer des poids remis à jour de connexion pour le sous-arrangement de contrôle d'après les valeurs reçues des caractéristiques d'entrée, les poids de connexion, les spécifications de connexion et les poids d'apprentissage, et
un sous-arrangement de prévision (24) destiné à :
calculer des valeurs des caractéristiques de sortie pour le sous-arrangement de prévision d'après les valeurs des caractéristiques d'entrée pour des essais à un ou plusieurs temps historiques, les poids remis à jour de connexion calculés par le sous-arrangement de contrôle et les spécifications de connexion, et
calculer des poids remis à jour de connexion pour le sous-arrangement de prévision d'après les valeurs reçues des caractéristiques d'entrée pour l'essai au moment actuel, les poids de connexion, les spécifications de connexion, les poids d'apprentissage et les valeurs imputées des caractéristiques de sortie, le système comprenant en outre :
un dispositif (26a-b) destiné à mémoriser les poids remis à jour de connexion,
un dispositif (12) destiné à donner accès aux valeurs calculées des caractéristiques de sortie,
un dispositif (44) d'assemblage d'un vecteur des valeurs calculées de sortie d'après les valeurs des caractéristiques de sortie calculées par chaque noyau,
un dispositif (18) destiné à répondre au vecteur des valeurs calculées de sortie,
un dispositif (16) destiné à déterminer si des opérations d'affinement sont indiquées, et
un dispositif (16) destiné à exécuter une ou plusieurs opérations d'affinement choisies dans le groupe qui comprend :
la suppression de valeurs inefficaces des caractéristiques d'entrée ou de sortie,
la combinaison de valeurs redondantes des caractéristiques d'entrée ou de sortie,
la spécification de nouvelles valeurs des caractéristiques d'entrée ou de sortie,
le recalcul des spécifications des caractéristiques d'entrée d'après les valeurs mesurées d'entrée et les valeurs calculées de sortie pour des essais à plusieurs temps,
le recalcul des poids d'apprentissage d'après les valeurs mesurées d'entrée et les valeurs calculées de sortie pour des essais à plusieurs temps,
le recalcul des spécifications de connexion d'après les valeurs mesurées d'entrée et les valeurs calculées de sortie pour les essais à plusieurs temps,
le recalcul des spécifications des caractéristiques de sortie d'après les valeurs mesurées d'entrée et des valeurs calculées de sortie pour des essais à plusieurs temps, et
la réaffectation des fonctionnalités parmi les noyaux.

26. Système d'ordinateur selon la revendication 25, dans lequel chaque noyau de l'arrangement à plusieurs noyaux comprend :
un dispositif (22, 24) destiné à recevoir une ou plusieurs des valeurs des caractéristiques d'entrée,
un dispositif (22, 24) destiné à récupérer des spécifications de connexion (42) qui définissent des relations mathématiques de calcul d'une ou plusieurs valeurs des caractéristiques de sortie d'après les valeurs reçues des caractéristiques d'entrée,
un dispositif (22, 24) destiné à récupérer un ensemble de poids de connexion (40a, b) représentant des coefficients de régression parmi les valeurs reçues des caractéristiques d'entrée et les valeurs calculées des caractéristiques de sortie,
un dispositif (22, 24) destiné à récupérer un ensemble de poids d'apprentissage (55) définissant des relations mathématiques de remise à jour des poids de connexion d'après les valeurs reçues des caractéristiques d'entrée,
un dispositif (22, 24) de calcul des valeurs des caractéristiques de sortie (38) d'après des valeurs reçues des caractéristiques d'entrée, les poids de connexion et les spécifications de connexion, et
un dispositif (22, 24) de calcul de poids remis à jour de connexion d'après les valeurs reçues des caractéristiques d'entrée, les poids de connexion, les spécifications de connexion et les poids d'apprentissage.

27. Système d'ordinateur selon l'une des revendications 25 à 26, dans lequel :
les poids de connexion (40a-b) comprennent les éléments d'une matrice inverse de covariances, et
l'étape de calcul des poids remis à jour de connexion comprend l'étape de remise à jour de la matrice inverse de covariances.

28. Système d'ordinateur selon l'une des revendications 25 et 26, dans lequel :
les poids de connexion (40a-b) comprennent les éléments d'une matrice inverse de covariances, et
le dispositif de calcul des poids remis à jour de connexion comprend un dispositif de remise à jour d'une matrice de covariances qui correspond à la matrice inverse de covariances et d'inversion de la matrice remise à jour de covariances.

29. Système d'ordinateur selon l'une quelconque des revendications 25 à 28, dans lequel le dispositif de calcul des valeurs des caractéristiques de sortie comprend :
un dispositif (22) d'imputation de valeurs des caractéristiques de sortie pour l'essai au moment actuel d'après les valeurs des caractéristiques d'entrée pour des essais à un ou plusieurs temps historiques, et
un dispositif (24) de prédiction des valeurs des caractéristiques de sortie pour des essais à des temps futurs.

30. Système d'ordinateur selon l'une quelconque des revendications 25 à 29, dans lequel le dispositif de calcul des valeurs des caractéristiques de sortie comprend :
un dispositif (22) d'imputation des valeurs des caractéristiques de sortie pour l'essai au moment actuel d'après les valeurs des caractéristiques d'entrée pour des essais à un ou plusieurs temps historiques,
un dispositif (22) de calcul des valeurs de contrôle de caractéristiques de sortie d'après les valeurs des caractéristiques d'entrée pour l'essai au moment actuel,
un dispositif (22) de calcul de valeurs de déviation d'après les valeurs imputées des caractéristiques de sortie et les valeurs contrôlées des caractéristiques de sortie, et
un dispositif (24) d'établissement des valeurs calculées de sortie d'après les valeurs contrôlées des caractéristiques de sortie.

31. Système d'ordinateur selon l'une quelconque des revendications 25 à 30, dans lequel le dispositif (18) destiné à répondre au vecteur des valeurs calculées de sortie comprend :
un dispositif destiné à comparer chaque valeur de déviation à une valeur associée de seuil, et
un dispositif destiné, lorsque l'une des valeurs de déviation dépasse sa valeur associée de seuil, à exécuter une ou plusieurs opérations de déviation choisies dans le groupe qui comprend :
l'indication d'une condition d'alarme, et
l'établissement des valeurs calculées de sortie d'après la valeur à imputer de caractéristiques de sortie plutôt que de la valeur contrôlée de caractéristiques de sortie pour la valeur de caractéristiques de sortie associée à la valeur de déviation qui dépasse sa valeur associée de seuil.

32. Système d'ordinateur selon l'une quelconque des revendications 25 à 31, dans lequel le dispositif (18) destiné à répondre au vecteur des valeurs calculées de sortie comprend un dispositif destiné à exécuter une ou plusieurs opérations de commande sélectionnées dans le groupe qui comprend :
l'affichage d'une représentation des valeurs calculées de sortie sur un dispositif d'affichage, et
la commande d'un paramètre contrôlé pour la compensation d'une condition indiquée par les valeurs calculées de sortie.

33. Système d'ordinateur selon l'une quelconque des revendications 25 à 32, comprenant en outre :
un dispositif (54) de recalcul des poids d'apprentissage d'après les valeurs mesurées d'entrée et les valeurs calculées de sortie pour des essais à plusieurs temps, et
un dispositif (52) de recalcul des spécifications des valeurs caractéristiques d'après les valeurs mesurées d'entrée et les valeurs calculées de sortie pour des essais à plusieurs temps.

34. Système d'ordinateur selon l'une quelconque des revendications 25 à 33, comprenant en outre :
un dispositif (50) de suppression de valeurs inefficaces des caractéristiques d'entrée ou de sortie,
un dispositif (50) de combinaison de valeurs redondantes des caractéristiques d'entrée ou de sortie,
un dispositif (50) de spécification de nouvelles valeurs des caractéristiques d'entrée ou de sortie,
un dispositif (50) de recalcul des spécifications de connexion d'après les valeurs mesurées d'entrée et les valeurs calculées de sortie pour des essais à plusieurs temps, et
un dispositif (50) destiné à réaffecter les fonctionnalités parmi les noyaux.

35. Système d'ordinateur selon l'une quelconque des revendications 25 à 34, dans lequel le processeur à plusieurs noyaux comprend :
un arrangement (408) de noyaux dédiés spatialement (400a-n) correspondant à un champ contigu spatialement à partir duquel les valeurs d'entrée sont mesurées et pour lequel des valeurs de sortie sont prédites, et
chaque noyau ayant une configuration assurant le calcul de l'une des valeurs calculées de sortie d'après un ensemble de valeurs mesurées adjacentes d'entrée.

36. Système d'ordinateur selon la revendication 35, dans lequel :
chaque noyau du processeur à plusieurs noyaux correspond à un élément d'image d'une image visible,
chaque valeur mesurée d'entrée correspond à une intensité mesurée de l'un des éléments de l'image visible, et
chaque valeur calculée de sortie correspond à une intensité calculée de l'un des éléments de l'image visible.

37. Système d'ordinateur selon l'une quelconque des revendications 25 à 34, dans lequel le processeur à plusieurs noyaux comprend :
un arrangement (500) de noyaux dédiés temporellement (504a-n) correspondant à un indice à base temporelle à partir duquel les valeurs d'entrée sont mesurées et pour lequel des valeurs de sortie sont prédites, et
chaque noyau ayant une configuration convenant à la prédiction d'une valeur mutuellement exclusive parmi les valeurs d'indice à base temporelle d'après les valeurs mesurées d'entrée.

38. Système d'ordinateur selon la revendication 37, dans lequel :
chaque noyau du processeur à plusieurs noyaux correspond à une prévision mutuellement exclusive de prix spécifique temporellement pour un indice de prix de marchandise, et
chaque noyau ayant une configuration permettant la prédiction de sa prévision correspondante exclusive mutuellement de prix spécifique au temps, d'après les valeurs mesurées d'entrée.

39. Système d'ordinateur selon la revendication 38, dans lequel la valeur mesurée d'entrée comprend :
l'indice de prix de marchandises, et
des indices de prix pour de devises et autres marchandises.

40. Système d'ordinateur selon l'une quelconque des revendications 25 à 34, dans lequel le processeur à plusieurs noyaux comprend :
plusieurs (600) groupes de noyaux (602a-n) comprenant chacun plusieurs noyaux dédiés temporellement correspondant à un indice à base temporelle à partir duquel des valeurs d'entrée sont mesurées et pour lequel des valeurs de sortie sont prédites,
chaque groupe de noyaux comprenant plusieurs noyaux individuels ayant chacun une configuration permettant la prédiction d'une composante de valeur mutuellement exclusive d'indice à base temporelle d'après les valeurs mesurées d'entrée,
les groupes de noyaux dédiés temporellement définissant un arrangement de groupes de noyaux dédiés spatialement,
chaque groupe de noyaux ayant une configuration permettant le calcul d'une composante de l'indice à base temporelle.

41. Système d'ordinateur selon la revendication 40, dans lequel :
l'indice à base temporelle est un indice de demande d'électricité,
chaque groupe de noyaux correspond à plusieurs points de distribution d'électricité, et
les valeurs mesurées d'entrée comprennent des données de demande d'électricité et météorologiques.

42. Appareil destiné à la mise en oeuvre du procédé selon l'une quelconque des revendications 1 à 24.

43. Support de mémorisation d'ordinateur contenant des instructions exécutables par ordinateur pour l'exécution du procédé selon l'une quelconque des revendications 1 à 24.
